# EUROPÄISCHE PATENTSCHRIFT

(11) **EP 0 981 417 B1**
(45) Veröffentlichungstag und Bekanntmachung des Hinweises auf die Patenterteilung: **05.11.2003**
(21) Anmeldenummer: 98933523.7
(22) Anmeldetag: 12.05.1998
(51) Int. Cl.: B23D 77/10, B23D 77/00

(54) **FEINSTBEARBEITUNGSWERKZEUG**
SUPERFINISHING TOOL
OUTIL POUR USINAGE DE HAUTE PRECISION

(30) Priorität: 12.05.1997 DE 19719892
(43) Veröffentlichungstag der Anmeldung: 01.03.2000
(73) Patentinhaber: HARTMETALLWERKZEUGFABRIK ANDREAS MAIER GMBH, 88477 Schwendi-Hörenhausen (DE)
(72) Erfinder: MAIER, Andreas, D-88477 Schwendi-Hörenhausen (DE)
(74) Vertreter: König, Beate, Dipl.-Phys. Dr.
(86) Internationale Anmeldenummer: DE9801331
(87) Internationale Veröffentlichungsnummer: WO98051439

(56) Entgegenhaltungen:
- FR-A- 2 460 173

## Beschreibung

Die Erfindung betrifft ein Feinstbearbeitungswerkzeug gemäß Oberbegriff des Anspruchs 1.

So ein Werkzeug ist aus der CH-PS 645051 bekannt.

Derartige Werkzeuge werden insbesondere als Reibahlen verwendet.

Aus der CH-PS 449 390 ist eine Reibahle mit einem Schaft und mindestens einer starren Schneide sowie mit mindestens einer Führungsleiste am Umfang und einer Konusschraube bekannt, deren Einstellkonus sich über den vorderen Schneidenbereich erstreckt und mittels deren der Schneiddurchmesser einstellbar ist. Die Reibahle weist eine Kühlmittelzufuhr auf, deren Werkzeugkörper mit einer zum Schneidkopf führenden zentralen Längsbohrung versehen ist, von der mehrere, zwischen den Messern austretende Querbohrungen schräg nach außen verlaufen. Durch diese Bohrungen wird Kühl- und Schmiermittel zugeführt, um den Schneidkopf während des Schneidvorgangs zu kühlen bzw. zu schmieren.

Bei einer in der DE 32 34 238 A beschriebenen Reibahle mit nachstellbarem Schneidkopf ist eine zentrale Kühlmittelbohrung vorgesehen, die sich in zwei divergierende, in flachem Winkel am Schaft der Konusschraube vorbeigeführte Verteilungsbohrungen verzweigt. Der Konus erstreckt sich nur über den vorderen Schneidenbereich, so daß bei einer Verstellung nur der vordere Bereich der Reibahle aufgespreizt wird.

Gemäß EP 0 215 144 B ist eine Reibahle mit durch eine Konusschraube aufweitbarem Schneidkopf mit einem axial durch den Reibahlenschaft geführten Kühlmittelkanal versehen, der in eine den Gewindeschaft der Konusschraube aufnehmende Gewindebohrung und anschließend an diese in einen hohlzylindrischen, durch die Konusschraube aufweitbaren Teil des Reibahlenschaftes mit dem Schneidkopf übergeht. Zwischen dem hohlzylindrischen Schaftteil und der Konusschraube ist ein Ringkanal eingeschlossen, der über einen achsparallelen Kühlmittelkanal in der Konusschraube mit dem axialen Kühlmittelkanal verbunden ist. Von dem Ringkanal führt mindestens ein Kanal zwischen die Schneiden, wobei dieser Kanal in einem Winkel zwischen 30 und 45° nach vorne gerichtet sein kann.

Die CH-PS 645 051 betrifft eine nachstellbare Maschinenreibahle mit Konusschraube, die Nachstellmittel zur Veränderung des Abstandes der Schneide und der Führungsleisten von der Reibahlenachse gleichem Sinn und in annähernd gleichem Maße aufweist. Der Einstellkonus erstreckt sich ebenfalls nur über den vorderen Schneidenbereich.

In der FR 2 460 173 A ist ein Feinstbearbeitungswerkzeug beschrieben, die einen aufweitbaren Konuseinsatz aufweist, der länger als die Schneide ist. Der Konuseinsatz sitzt in einer axialen Sackbohrung des Werkzeugschaftes und hat in seiner Stirnseite eine zylindrische Aussparung. Ein radialer Schlitz erstreckt sich von der Stirnseite bis etwa in Höhe des Endes der Sackbohrung. Zwischen der Schneide und dem radialen Schlitz befindet sich eine radiale Schraube, die in Kontakt mit dem Konuseinsatz steht. Durch Drehen der Schraube kann eine lokale asymmetrische Deformation des an dieser Stelle materialmäßig geschwächten Schaftes und damit eine Änderung des Schneiddurchmessers bewirkt werden. Diese Anordnung ermöglicht lediglich eine lokale Durchmesserverstellung und macht zusätzliche Fertigungsmaßnahmen und Teile erforderlich. Außerdem ist sie nur für eine Schneide geeignet, wobei der einstellbare Schneidenbereich nur kurz ist.

Der Erfindung liegt die Aufgabe zugrunde, ein Feinstbearbeitungswerkzeug zu schaffen, das vielseitig einsetzbar ist, hochgenau schneidet und kostengünstig herstellbar ist.

Diese Aufgabe ist erfindungsgemäß bei einem Feinstbearbeitungswerkzeug mit den Merkmalen des Anspruchs 1 gelöst. Vorteilhafte Weiterbildungen des erfindungsgemäßen Feinstbearbeitungswerkzeugs sind Gegenstand der abhängigen Ansprüche.

Ein erfindungsgemäßes Feinstbearbeitungswerkzeug weist somit einen Schaft und mindestens eine starre Schneide sowie mindestens eine Führungsleiste am Umfang und ein Mittel auf, mittels dessen der Schneiddurchmesser einstellbar ist. Das Mittel zur Einstellung des Schneiddurchmessers ist ein Aufspreizteil mit sich änderndem Durchmesser, wobei die Länge des Bereichs des Aufspreizteils mit sich änderndem Durchmesser mindestens gleich lang wie die Schneide ist und das Aufspreizteil entsprechend den Bereichen mit unterschiedlichen Durchmessern Druckbereiche an unterschiedlichen axialen Positionen aufweist derart, daß die Schneide an gezielten axialen Bereichen druckbeaufschlagt und im Durchmesser verstellt wird.

Ein Ausführungsbeispiel eines Aufspreizteils gemäß der Erfindung ist eine Konusschraube, ein anderes ein Konusring. Mit umfaßt sein sollen auch andere Aufspreizteile und -anordnungen mit sich änderndem Durchmesser, die die gewünschte Aufspreizung erzielen. Durch die lange Erstreckung des Konus bzw. des Konusbereichs ergibt sich eine Vergrößerung des Aufspreizbereichs. Infolgedessen können die Schneiden und/oder Führungsleisten achsparallel aufgespreizt werden, d.h. ihre Orientierung zur Achse bleibt unverändert und die Verjüngung des Feinstbearbeitungswerkzeugs wird beibehalten. Durch die trotz Durchmesseränderung gleich bleibende Verjüngung ergibt sich eine unverändert gute Oberflächenqualität des Werkzeugs.

Die unterschiedlichen Druckpunkte des Aufspreizteils, d.h. dessen axial versetzt angeordnete Druckbeaufschlagungsringbereiche, ermöglichen es, die Schneiden und Führungsleisten definiert zu verstellen. Je nach Schneiden- und Führungsleistenlänge kann der Druckpunkt an unterschiedliche Durchmesser und axiale Positionen des Aufspreizteils und damit einen gezielten axialen Bereich der Schneide oder Führungsleiste gelegt werden.

Es sind zweckmäßig im Schaft Aussparungen in geeigneter Form als Spreizhilfe bei der Verstellung des Schneiddurchmessers vorgesehen.

Infolge der Führungsleisten hat das Feinstbearbeitungswerkzeug einen ruhigen, stabilen Werkzeuglauf trotz hoher Drehzahl und/oder großer Werkstückhärte über seinen gesamten Durchmesserbereich. Zweckmäßig ist bei dem erfindungsgemäßen Feinstbearbeitungswerkzeug mindestens eine Führungsleiste pro Schneide vorgesehen. Es kann ferner eine Führungsleiste axial versetzt zur zugeordneten Schneide angeordnet sein.

Die Schneide und/oder mindestens eine Führungsleiste kann mit dem Schaft einstückig als Vollwerkzeug ausgeführt sein. Sehr günstig ist die Herstellung des Werkzeugs als Vollwerkzeug, beispielsweise Vollhartmetall. Die Schneide und/ oder Führungsleiste können eingesetzt sein, die Schneide auch aufgelötet sein. Das Schneiden- und Führungsleistenmaterial kann so unabhängig von dem Werkzeugkörper an die jeweiligen Einsatzbedingungen angepaßt gewählt werden. Beispielsweise sind Führungsleisten mit Minimalschmierung und bei hohen Drehzahlen zweckmäßig in Diamant ausgeführt.

Eine Variante des Aufspreizteils weist Konusabschnitte mit unterschiedlichem Konuswinkel auf. Auf diese Weise kann die Durchmesseraufweitung stufenweise ausgeführt werden. Das Aufspreizteil kann auch mehrteilig aufgebaut sein.

Bei einer vorteilhaften Ausführung des erfindungsgemäßen Feinstbearbeitungswerkzeugs kann das als Konusschraube ausgeführte Aufspreizteil anschließend an den Gewindebereich einen zylindrischen Abschnitt aufweisen, der im Paßsitz im Werkzeugschaft sitzt. Dies bewirkt eine Führung und Ausrichtung der Konusschraube und damit eine außerordentlich präzis zentrierte Aufweitung des Schneidbereichs, falls erwünscht.

Das Feinstbearbeitungswerkzeug gemäß der Erfindung kann mit einer Innenkühlung für Kühl- und/oder Schmiermittel versehen sein, das insbesondere zum Schneidbereich geleitet wird. Diese Innenkühlung ist beispielsweise als zentrale axiale Kühlmittelbohrung für Kühl- und/oder Schmiermittel im Werkzeugschaft vorgesehen. Von der zentralen axialen Kühlmittelbohrung führt in deren vorderem Bereich mindestens eine Abzweigbohrung nach außen. Die Abzweigbohrung mündet bei einer Ausführungsform der Innenkühlung in eine koaxiale Zuleitbohrung, die sich axial mindestens teilweise über den Schneidbereich erstreckt und von der mindestens eine Austrittsbohrung zum Schneidbereich führt. Insbesondere eignet sich der Einsatz von Kühl- bzw. Schmiermittel bei 10 % und mehr ölhaltiger Emulsion.

Mit dem erfindungsgemäßen Aufbau des Feinstbearbeitungswerkzeugs kann Kühl- und Schmiermittel in den Schneidbereich zugeführt werden, auch wenn der Werkzeugschaft beispielsweise durch eine Konusschraube aufweitbar ist oder mehrere Schneiden oder verstellbare Schneiden vorgesehen sind. Die das Kühl- und Schmiermittel führende Bohrung durchläuft im vorderen bzw. Schneidbereich weder eine eventuell vorhandene Konusschraube, noch deren Aufnahmekanal, so daß an dieser Stelle keine Materialschwächung erfolgt. Vielmehr verläuft die Bohrung im Schneidbereich koaxial und in radialer Richtung in der Nähe der Schneiden und Führungsleisten, die zu kühlen oder zu schmieren sind. Durch die einfache Kanalausgestaltung sind die Bohrungsgeometrien sehr einfach und daher mit geringem Aufwand für die verschiedensten Arten von Reib-, Senk- und Bohrwerkzeugen, auch ohne Konusschraube, realisierbar. Darüber hinaus kann zusätzlich die Kühlwirkung der das Kühlmittel durch den Werkzeugschaft zuführenden koaxialen Bohrung ausgenutzt werden.

Insbesondere ermöglicht es die erfindungsgemäße Bohrungsanordnung, auch Führungsleisten eines solchen Werkzeugs zu kühlen bzw. zu schmieren, so daß ein glatter und störungsfreier Werkzeuglauf gewährleistet ist. Zweckmäßig ist dann jeder Führungsleiste eine Austrittsbohrung zugeordnet. Das Kühl- und Schmiermittel kann so gezielt zugeführt werden und die Zwischenräume zwischen den Führungsrippen können gut von verbliebenem Spangut etc. gereinigt werden.

Vorzugsweise erstreckt sich die koaxiale Zuleitbohrung über die gesamte Länge des Schneidbereichs. Auf diese Weise kann das Kühl- und Schmiermittel über den gesamten Schneidbereich verteilt werden und an gewünschter Stelle über die Austrittsbohrungen den Schneiden oder Führungsrippen zugeleitet werden.

Eine besonders gute Kühl- und Schmierwirkung ergibt sich bei dem erfindungsgemäßen Feinstbearbeitungswerkzeug, wenn axial versetzt mehrere Austrittsbohrungen vorgesehen sind. Die Zahl und axiale Anordnung der Austrittsbohrungen kann dann entsprechend der zu erwartenden mechanischen und damit thermischen Belastung des Schneidbereichs gewählt werden.

Zweckmäßig mündet die Austrittsbohrung in den Spanraum einer zugeordneten Schneide. Auf diese Weise gelangt das Kühl- und Schmiermittel direkt an die zu kühlende Schneide und das Spangut kann gelöst und fort transportiert werden.

Bei einem vorteilhaften Ausführungsbeispiel des erfindungsgemäßen Feinstbearbeitungswerkzeugs führt die der Führungsleiste zugeordnete Austrittsbohrung in Drehrichtung vor der Führungsleiste nach außen, d.h. das Kühl- und Schmiermittel gelangt direkt zur zugehörigen Führungsleiste.

Vorzugsweise ist die Abzweigbohrung schräg nach vorne gerichtet. Der Kühl- und Schmiermittelstrahl kann so besonders einfach zur Schneidspitze gelangen.

Bei einer Ausführungsform des erfindungsgemäßen Feinstbearbeitungswerkzeugs weist die der Führungsleiste zugeordnete Abzweig- und/oder Austrittsbohrung einen kleineren Durchmesser als die der Schneide zugeordnete Bohrung auf. Dadurch wird der mechanisch stärker beanspruchten Schneide mehr Kühlmittel als den Führungsleisten zugeführt.

Das erfindungsgemäße Feinstbearbeitungswerkzeug kann mit einer oder mehreren starren Schneiden versehen sein. Es kann auch eine oder mehrere auswechselbare und/oder auf einem Träger montierte Schneiden aufweisen. Die oder die mindestens eine Schneide kann verstellbar sein, d.h. es kann eine Vorschneidstufe vorgesehen werden.

Außer einer oder mehreren am Umfang vorgesehenen Schneiden kann eine Stirnschneide oder ein Stirnschneidenbereich vorgesehen sein.

Die Konusschraube kann mit ihrem Gewindeende den axialen Kanal verschließen. Dies vereinfacht die Werkzeugherstellung, indem die zentrale Bohrung für den Kühlkanal bis zur Konusbohrung durchgebohrt wird.

Eine Anpassung an verschiedene Schneiden- und Führungsleistenausgestaltungen ist vorteilhaft dadurch ermöglicht, daß das Aufspreizteil Konusabschnitte mit unterschiedlichem Konuswinkel aufweist. Die Schneiden und Führungsleisten können so definiert verstellt werden.

Wenn das erfindungsgemäße Feinstbearbeitungswerkzeug mit Innenkühlung versehen ist, kann die axiale Kühlmittelbohrung vor dem der Werkzeugspitze entgegengesetzten Ende der Konusschraube in einen Verteilerring münden, von dem Abzweigbohrungen ausgehen.

Geeignete Materialien für die Schneide des erfindungsgemäßen Feinstbearbeitungswerkzeugs sind z.B. Hartmetall, Cermet, Keramik, polykristalliner, Natur- oder synthetischer Diamant als Dünn- und Dickfilm oder kubischem Bor-Nitrid.

Die Führungsleisten können aus z.B. Hartmetall, Cermet, Keramik, polykristallinem, Natur- oder synthetischem Diamant, mit und ohne Beschichtung, bestehen.

Bei dem erfindungsgemäßen Feinstbearbeitungswerkzeug kann auch vorgesehen sein, daß der Schneidkopf auswechselbar ist. Auf diese Weise kann das Werkzeug sehr vielseitig eingesetzt werden.

Bei einem vorteilhaften Ausführungsbeispiel der Erfindung ist der Schneidkopf mittels einer Bajonettverbindung, alternativ mittels eines Aufspreizteils am Werkzeugschaft befestigt. Selbstverständlich sind auch andere Adapterverbindungen möglich.

Das erfindungsgemäße Feinstbearbeitungswerkzeug kann eine, zwei, drei oder mehr Schneiden aufweisen.

Vorteilhaft ist mindestens eine Führungsleiste pro Schneide vorgesehen. Bei einem Ausführungsbeispiel eines Senk- und Reib-Schneidwerkzeuges sind zwei Führungsleisten pro Schneide vorgesehen.

Die Führungsleisten sind zweckmäßig zwischen den Schneiden am Umfang vorgesehen. Es kann jedoch auch eine Führungsleiste axial versetzt zur zugeordneten Schneide angeordnet sein. Auf diese Weise kann die Zahl der Führungsleisten pro Schneide und die erwünschte Führungswirkung trotz größerer Schneidenzahl beibehalten und so ein ruhiger, stabiler Werkzeuglauf trotz hoher Drehzahl und/oder großer Werkstückhärte gewährleistet werden.

Die Erfindung wird im folgenden weiter anhand von Ausführungsbeispielen und der Zeichnung beschrieben. Diese Darstellung dient lediglich zur Erläuterung der Erfindung und soll im einzelnen, ebenso wie die Zusammenfassung der Merkmale in den Unteransprüchen, nicht zur Einschränkung der Erfindung herangezogen werden. In der Zeichnung zeigen:
- Fig. 1A: eine Stirnansicht eines ersten Ausführungsbeispiels eines Feinstbearbeitungswerkzeugs aus Vollmaterial mit Konusschraube, einer Schneide und drei Führungsleisten,
- Fig. 1B: eine Stirnansicht eines zweiten Ausführungsbeispiels eines Feinstbearbeitungswerkzeugs aus Vollmaterial mit Konusschraube, einer Schneide und zwei Führungsleisten,
- Fig. 2A: eine Stirnansicht eines dritten Ausführungsbeispiels eines Feinstbearbeitungswerkzeugs mit Konus schraube, einer aufgelöteten Schneide und drei eingesetzten Führungsleisten,
- Fig. 2B: eine Stirnansicht eines vierten Ausführungsbeispiels eines Feinstbearbeitungswerkzeugs mit Konusschraube, einer aufgelöteten Schneide und zwei eingesetzten Führungsleisten,
- Fig. 3A: eine Stirnansicht eines fünften Ausführungsbeispiels eines Feinstbearbeitungswerkzeugs mit Konusschraube, Spreizhilfe, einer aufgelöteten Schneide und drei eingesetzten Führungsleisten,
- Fig. 3B: eine Stirnansicht eines sechsten Ausführungsbeispiels eines Feinstbearbeitungswerkzeugs mit Konusschraube, Spreizhilfe, einer aufgelöteten Schneide und zwei eingesetzten Führungsleisten,
- Fig. 4A: eine Stirnansicht eines siebten Ausführungsbeispiels eines Feinstbearbeitungswerkzeugs aus Vollmaterial mit Konusschraube, zwei Schneiden und vier Führungsleisten,
- Fig. 4B: eine Stirnansicht eines achten Ausführungsbeispiels eines Feinstbearbeitungswerkzeugs mit Konusschraube, zwei aufgelöteten Schneiden und vier eingesetzten Führungsleisten,
- Fig. 4C: eine Stirnansicht eines neunten Ausführungsbeispiels eines Feinstbearbeitungswerkzeugs mit Konusschraube, Spreizhilfe, zwei aufgelöteten Schneiden und vier eingesetzten Führungsleisten,
- Fig. 5A: eine Stirnansicht eines zehnten Ausführungsbeispiels eines Feinstbearbeitungswerkzeugs aus Vollmaterial mit drei Schneiden und drei Führungsleisten,
- Fig. 5B: eine Stirnansicht eines elften Ausführungsbeispiels eines Feinstbearbeitungswerkzeugs mit drei aufgelöteten Schneiden und drei eingesetzten Führungsleisten,
- Fig. 5C: eine Stirnansicht eines zwölften Ausführungsbeispiels eines Feinstbearbeitungswerkzeugs mit Konusschraube, drei aufgelöteten Schneiden und drei eingesetzten Führungsleisten,
- Fig. 5D: eine Stirnansicht eines dreizehnten Ausführungsbeispiels eines Feinstbearbeitungswerkzeugs mit Konusschraube, Spreizhilfe, drei aufgelöteten Schneiden und drei eingesetzten Führungsleisten,
- Fig. 6A: einen Querschnitt durch ein vierzehntes Ausführungsbeispiel eines Feinstbearbeitungswerkzeugs mit drei Schneiden, Konusschraube, Spreizhilfe sowie drei Führungsleisten, ausgeführt längs Linie A-A in Fig. 6B,
- Fig. 6B: einen Längsschnitt durch das Feinstbearbeitungswerkzeug von Fig. 6A,
- Fig. 7A: einen Querschnitt durch ein fünfzehntes Ausführungsbeispiel eines Feinstbearbeitungswerkzeugs mit drei Schneiden, Konusschraube, Spreizhilfe sowie sechs Führungsleisten, ausgeführt längs Linie A-A in Fig. 7B,
- Fig. 7B: einen Längsschnitt durch das Feinstbearbeitungswerkzeug von Fig. 7A,
- Fig. 8: bis 10 jeweils Längsschnitte durch ein sechzehntes bis achtzehntes Ausführungsbeispiel eines Feinstbearbeitungswerkzeugs ähnlich Fig. 6 und 7, jedoch mit unterschiedlich definierter Anlagefläche zur Erzielung von definierten Druckpunkten,
- Fig. 11A: einen Querschnitt durch ein neunzehntes Ausführungsbeispiel eines Feinstbearbeitungswerkzeugs mit sechs Schneiden und Konusschraube mit achsparalleler Schneidenverstellung, ausgeführt längs Linie A-A in Fig. 11B,
- Fig. 11B: einen Längsschnitt durch das Feinstbearbeitungswerkzeug von Fig. 11A,
- Fig. 12A: einen Querschnitt durch ein zwanzigstes Ausführungsbeispiel eines Feinstbearbeitungswerkzeugs mit drei Schneiden, Konusschraube mit achsparalleler Schneidenverstellung, Spreizhilfe sowie drei Führungsleisten, ausgeführt längs Linie A-A in Fig. 12B,
- Fig. 12B: einen Längsschnitt durch das Feinstbearbeitungswerkzeug von Fig. 12A,
- Fig. 13A: einen Teillängsschnitt durch ein einundzwanzigstes Ausführungsbeispiel eines Feinstbearbeitungswerkzeugs mit auswechselbarem Schneidkopf,
- Fig. 13B: einen Querschnittschnitt durch das Feinstbearbeitungswerkzeug von Fig. 13A, ausgeführt längs Linie A-A in Fig. 13A,
- Fig. 13C: einen Querschnittschnitt durch das Feinstbearbeitungswerkzeug von Fig. 13A, ausgeführt längs Linie B-B in Fig. 13A,
- Fig. 14: einen Teillängsschnitt durch ein zweiundzwanzigstes Ausführungsbeispiel eines Feinstbearbeitungswerkzeugs mit auswechselbarem Schneidkopf,
- Fig. 15A: einen Teillängsschnitt durch ein dreiundzwanzigstes Ausführungsbeispiel eines Feinstbearbeitungswerkzeugs mit auswechselbarem Schneidkopf,
- Fig. 15B: einen Querschnittschnitt durch das Feinstbearbeitungswerkzeug von Fig. 15A, ausgeführt längs Linie A-A in Fig. 15A,
- Fig. 16A: einen Teillängsschnitt durch ein vierundzwanzigstes Ausführungsbeispiel eines Feinstbearbeitungswerkzeugs mit auswechselbarem Schneidkopf,
- Fig. 16B: einen Querschnittschnitt durch das Feinstbearbeitungswerkzeug von Fig. 16A, ausgeführt längs Linie A-A in Fig. 16A,
- Fig. 16C: einen Querschnittschnitt durch das Feinstbearbeitungswerkzeug von Fig. 16A, ausgeführt längs Linie B-B in Fig. 16A,
- Fig. 17A: einen Teillängsschnitt durch ein fünfundzwanzigstes Ausführungsbeispiel eines Feinstbearbeitungswerkzeugs mit auswechselbarem Schneidkopf,
- Fig. 17B: einen Querschnittschnitt durch das Feinstbearbeitungswerkzeug von Fig. 17A, ausgeführt längs Linie A-A in Fig. 17A,
- Fig. 17C: einen Querschnittschnitt durch das Feinstbearbeitungswerkzeug von Fig. 17A, ausgeführt längs Linie B-B in Fig. 17A,
- Fig. 18: einen Teillängsschnitt durch ein sechundzwanzigstes Ausführungsbeispiel eines Feinstbearbeitungswerkzeugs mit auswechselbarem Schneidkopf,
- Fig. 19A: einen Teillängsschnitt durch ein siebenundzwanzigstes Ausführungsbeispiel eines Feinstbearbeitungswerkzeugs mit auswechselbarem Schneidkopf,
- Fig. 19B: einen Querschnittschnitt durch das Feinstbearbeitungswerkzeug von Fig. 19A, ausgeführt längs Linie A-A in Fig. 19A,
- Fig. 19C: einen Querschnittschnitt durch das Feinstbearbeitungswerkzeug von Fig. 19A, ausgeführt längs Linie B-B in Fig. 19A,
- Fig. 20A: einen Teillängsschnitt durch ein achtundzwanzigstes Ausführungsbeispiel eines Feinstbearbeitungswerkzeugs mit auswechselbarem Schneidkopf,
- Fig. 20B: einen Querschnittschnitt durch das Feinstbearbeitungswerkzeug von Fig. 20A, ausgeführt längs Linie A-A in Fig. 20A,
- Fig. 21: einen Teillängsschnitt durch ein neunundzwanzigstes Ausführungsbeispiel eines Feinstbearbeitungswerkzeugs mit auswechselbarem Schneidkopf,
- Fig. 22A: einen Teillängsschnitt durch ein dreißigstes Ausführungsbeispiel eines Feinstbearbeitungswerkzeugs mit auswechselbarem Schneidkopf,
- Fig. 22B: einen Querschnittschnitt durch das Feinstbearbeitungswerkzeug von Fig. 22A, ausgeführt längs Linie A-A in Fig. 22A,
- Fig. 23A: eine Stirnansicht eines einunddreißigsten Ausführungsbeispiels eines Feinstbearbeitungswerkzeugs mit sechs Schneiden und einer Konusschraube,
- Fig. 23B: einen Teillängsschnitt durch das Feinstbearbeitungswerkzeug von Fig. 23A,
- Fig. 24: eine Stirnansicht eines zweiunddreißigsten Ausführungsbeispiels eines Feinstbearbeitungswerkzeugs mit sechs Schneiden, einer Konusschraube sowie Spreizhilfe,
- Fig. 25: eine Stirnansicht eines dreiunddreißigsten Ausführungsbeispiels eines Feinstbearbeitungswerkzeugs mit sechs Schneiden, einer Konusschraube sowie Spreizhilfe und sechs Führungsleisten,
- Fig. 26A: eine Stirnansicht eines vierunddreißigsten Ausführungsbeispiels eines Feinstbearbeitungswerkzeugs mit sechs Schneiden, einer Konusschraube sowie Spreizhilfe,
- Fig. 26B: einen Teillängssschnitt durch das Feinstbearbeitungswerkzeug von Fig. 26A,
- Fig. 27A: eine Stirnansicht eines fünfunddreißigsten Ausführungsbeispiels eines Feinstbearbeitungswerkzeugs mit sechs Schneiden, einer Konusschraube sowie Spreizhilfe,
- Fig. 27B: einen Teillängssschnitt durch das Feinstbearbeitungswerkzeug von Fig. 27A,
- Fig. 28: einen Längsschnitt durch ein sechsunddreißigstes Ausführungsbeispiel eines Feinstbearbeitungswerkzeugs mit sechs Schneiden, einer Konusschraube sowie Spreizhilfe,
- Fig. 29: einen Längsschnitt durch ein siebenunddreißigstes Ausführungsbeispiel eines Feinstbearbeitungswerkzeugs mit sechs Schneiden, einer Konusschraube sowie Spreizhilfe,
- Fig. 30: einen Längsschnitt durch ein achtunddreißigstes Ausführungsbeispiel eines Feinstbearbeitungswerkzeugs mit sechs Schneiden, einer Konusschraube sowie Spreizhilfe,
- Fig. 31: einen Längsschnitt durch ein neununddreißigstes Ausführungsbeispiel eines Feinstbearbeitungswerkzeugs mit sechs Schneiden, einer Konusschraube sowie Spreizhilfe und
- Fig. 32: eine Stirnansicht einer vierzigstes Ausführungsbeispiels eines Feinstbearbeitungswerkzeugs mit zwölf Schneiden sowie Spreizhilfe.

In der Zeichnung werden stets gleiche Bezugszeichen für gleiche Teile verwendet.

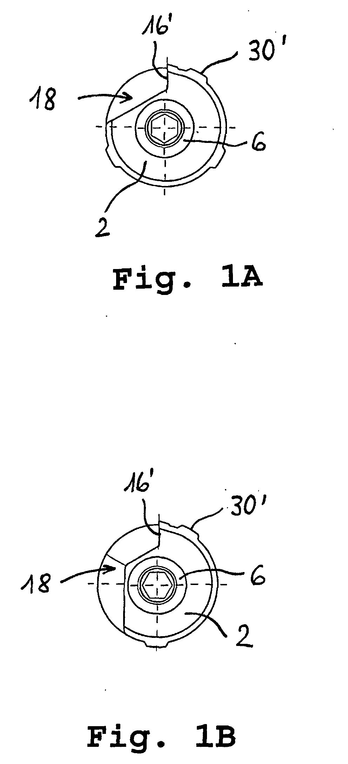

Es wird zunächst auf Fig. 1A Bezug genommen, die ein erstes Ausführungsbeispiel eines Feinstbearbeitungswerkzeugs, ein Reib- und Senk-Schneidwerkzeug aus Vollmaterial (Hartmetall) mit einem Schaft 2, einer Konusschraube 6, einer Schneide 16', einem Spanraum 18 und drei Führungsleisten 30' zeigt. Die Führungsleisten 30' sind mit einem Winkelabstand von 120° angeordnet. Das Schneidwerkzeug kann mit und ohne Innenkühlung ausgestattet sein. Eine solche Innenkühlung kann einen zentralen Kühlmittelkanal und zwei oder mehr Kühlmittelkanäle aufweisen.

Das zweite Ausführungsbeispiel von Fig. 1B unterscheidet sich von dem ersten Ausführungsbeispiel lediglich in Zahl und der Führungsleisten 30'. Dies sind hier gegenüberliegend angeordnet.

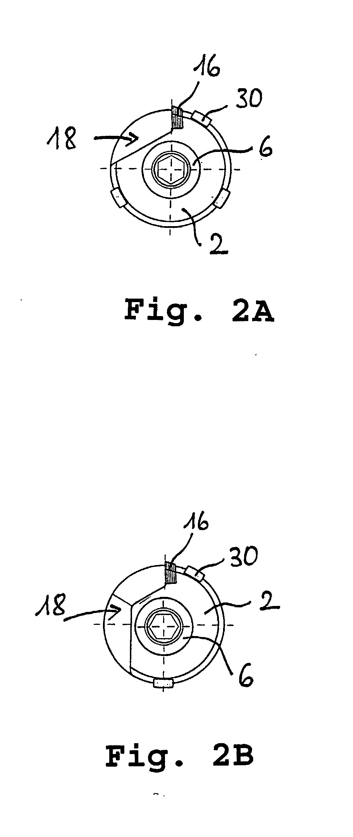

Bei dem ebenfalls mit einer Schneide ausgeführten und in Fig. 2A dargestellten dritten Ausführungsbeispiel ist die Schneide 16 aufgelötet und die drei Führungsleisten 30 aus beispielsweise Hartmetall sind eingesetzt. Der Werkzeugschaft 2 ist beispielsweise aus Stahl. Fig. 2B zeigt ähnlich Fig. 1B eine Variante mit zwei gegenüberliegenden Führungsleisten 30.

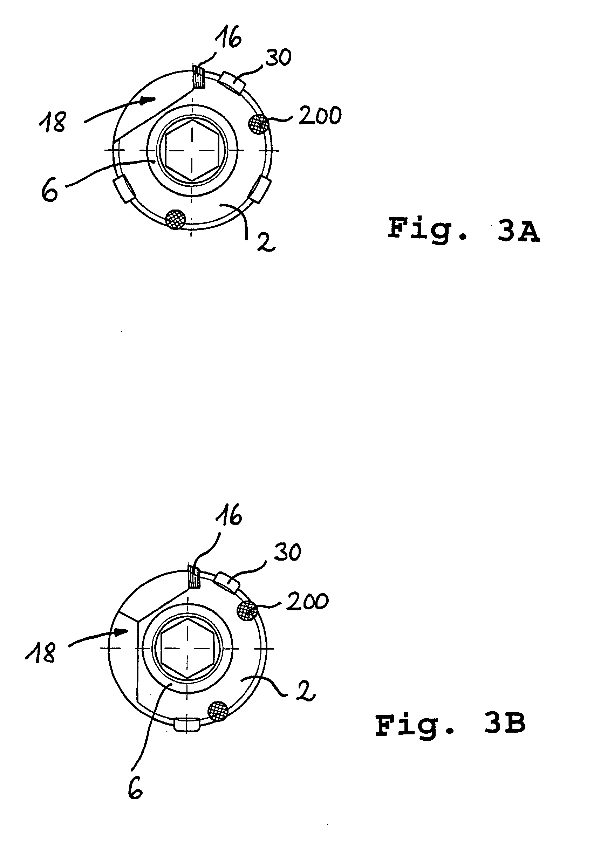

In Fig. 3A und 3B sind ein fünftes und sechstes Ausführungsbeispiel eines Feinstbearbeitungswerkzeugs gezeigt, die sich von den in Fig. 2A und 2B dargestellten Ausführungsbeispielen darin unterscheiden, daß eine Spreizhilfe vorgesehen ist. Diese besteht im gezeigten Ausführungsbeispiel in Bohrungen 200, die mit Kunststoffstopfen verschlossen sind oder beispielsweise ausgegossen sind. Statt der Bohrungen 200 können auch Schlitze erodiert sein, ggf. mit Bohrungen kombiniert. Die Aufgabe der Spreizhilfe ist eine geringfügige Materialschwächung, die ein Aufspreizen des Schneidkopfes zu dessen Verstellung gestattet.

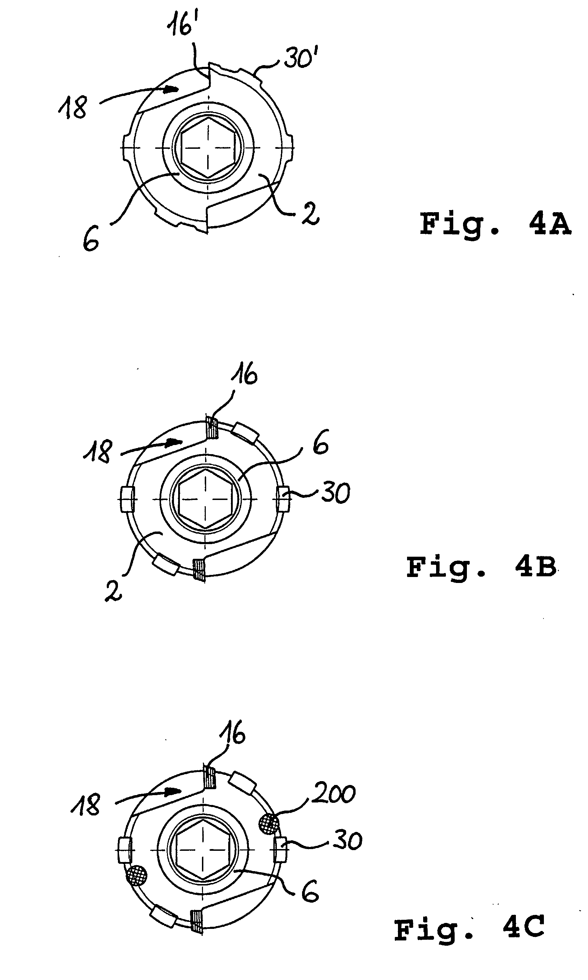

Fig. 4A, 4B und 4C zeigen Stirnansichten eines siebten, achten und neunten Ausführungsbeispiels eines Feinstbearbeitungswerkzeugs mit zwei Schneiden entsprechend Fig. 1A, 2A und 3A. Sie werden daher nicht im einzelnen beschrieben.

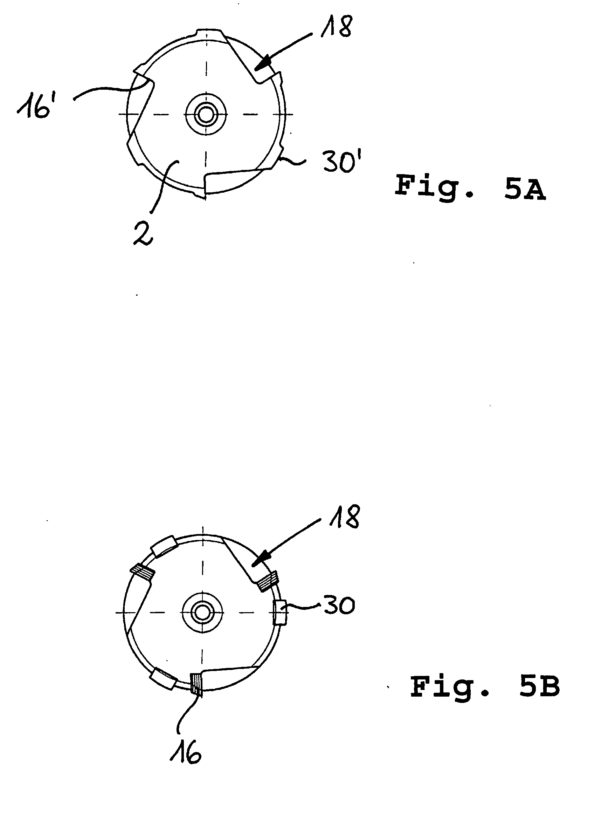

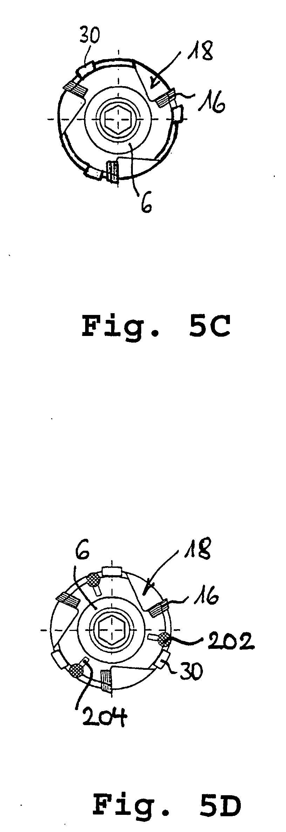

Entsprechend sind in Fig. 5A, 5B, 5C und 5D ein zehntes bis dreizehntes Ausführungsbeispiel eines Feinstbearbeitungswerkzeugs mit drei Schneiden dargestellt. Die Fig. 5A, 5B sind analog Fig. 1A, 2A. Das Ausführungsbeispiel von Fig. 5C weist keine Spreizhilfe auf. Das Ausführungsbeispiel von Fig. 5D weist eine Spreizhilfe auf, die von der gemäß Fig. 3A verschieden ist. Sie umfaßt eine kleinere Bohrung 202, die mit einem erodierten Schlitz 204 kombiniert ist.

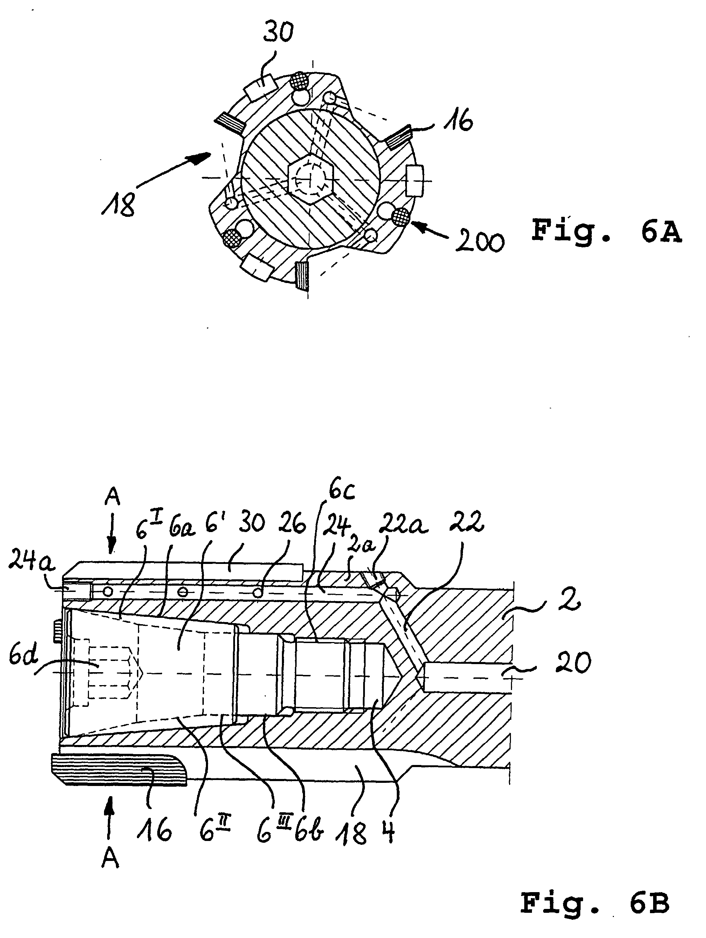

Als nächstes wird ein vierzehntes Ausführungsbeispiel eines Feinstbearbeitungswerkzeugs mit drei Schneiden, Konusschraube, Spreizhilfe und drei Führungsleisten anhand von Fig. 6 beschrieben. Das Feinstbearbeitungswerkzeug umfaßt einen Schaft 2, von dem lediglich das vordere Ende dargestellt ist, das vorne einen Teil 2a mit vergrößertem Durchmesser aufweist. Der Schaft 2 weist in seinem vorderen Bereich eine zentrale Stirnbohrung 4 mit mehreren Abschnitten zur Aufnahme einer Konusschraube 6 mit einem vorderen konischen Teil 6a, einem zylindrischen Teil 6b und einem Gewindeteil 6c sowie einer Sechskantöffnung 6d für einen Inbusschraubendreher auf. Mit dem zylindrischen Teil 6b sitzt die Konusschraube 6' im Paßsitz, wodurch sie zentriert ist. Ein Einwärtsschrauben der Konusschraube führt zu einer allmählichen Aufweitung des Schafts 2 im Schneidbereich, und auf diese Weise kann der Schneiddurchmesser eingestellt werden. Der Schaft 2 trägt in bekannter Weise am vorderen Teil 2a eingesetzte Diamantschneiden 16 in Hartmetall, Diamant oder einem sonstigen geeigneten Material mit zugeordneten Spanräumen 18.

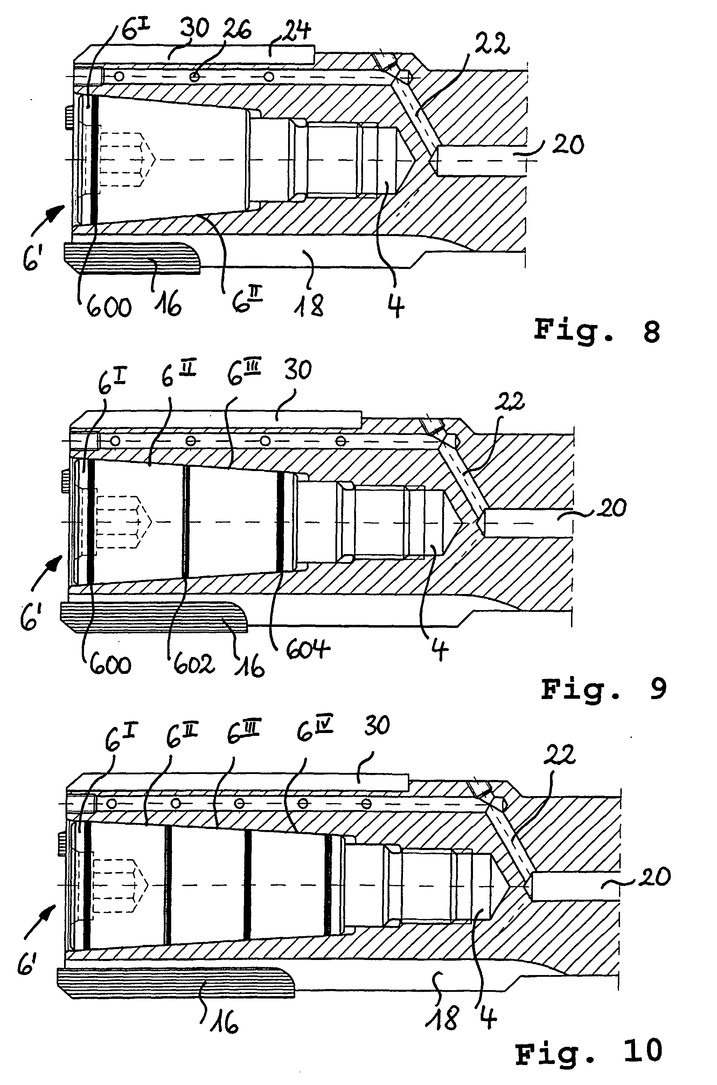

In Fig. 6B ist eine Variante der Konusschraube dargestellt, bei der der konische Teil 6a' in drei Abschnitte 6^{I}, 6^{II}, 6^{III} mit unterschiedlichen Steigungen (in nicht maßstäblicher Darstellung) unterteilt ist. Auf diese Weise kann die Verstellung des Schneidkopfes im wesentlichen im gewünschten Schneid- bzw. Kontaktbereich durchgeführt werden. Durch Auswahl einer Konusschraube mit unterschiedlichen Kegelwinkeln kann der Druckpunkt je nach Schneiden- und Führungsleistenlänge an einen gezielten axialen Bereich der Schneide oder Führungsleiste gelegt werden. Dies wird untenstehend anhand von Fig. 8 bis 10 noch mehr im einzelnen dargestellt.

Im hinteren Teil des Schafts 2 erstreckt sich eine axiale Bohrung 20 für Kühl- und Schmiermittel in Richtung des Schneidkopfes. Vor der Stirnbohrung 4 verzweigt sich die axiale Bohrung 20 in Abzweigbohrungen 22, die schräg nach außen und nach vorne verlaufen. Zur Außenseite sind die Abzweigbohrungen 22 durch Stopfen 22a verschlossen. In einem radialen Abstand von der Schaftachse, der größer als der Außendurchmesser der zylindrischen Hülse 12 ist, gehen die Abzweigbohrungen 22 in koaxiale Zuleitbohrungen 24 über, die an ihrem stirnseitigen Ende durch Stopfen 24a verschlossen sind. Etwa vom mittleren Bereich bis zum vorderen Bereich weisen beim gezeigten Ausführungsbeispiel die koaxialen Zuleitbohrungen 24 drei Austrittsbohrungen 26 auf, die jeweils im Spanraum 18 münden.

Durch diesen Aufbau der Kühlmittel- und Schmiermittelzuleitungen wird erreicht, daß der Schaft 2 selbst im Schneidbereich durch die koaxialen Zuleitbohrungen 24 gekühlt wird. Die koaxiale Anordnung der Zuleitbohrungen 24 ermöglicht es, die Lage der Austrittsbohrungen 26 nach den Beanspruchungen des Werkzeugs zu legen und deren Zahl bedarfsweise zu wählen, so daß die Schneiden durch direktes Anspülen wirksam gekühlt werden können, und zwar über einen gewünschten axialen Bereich. Des weiteren kann die Spanausspülung und Reinigung des Spanraums auf diese Weise auch entsprechend dem Werkstückmaterial optimiert werden.

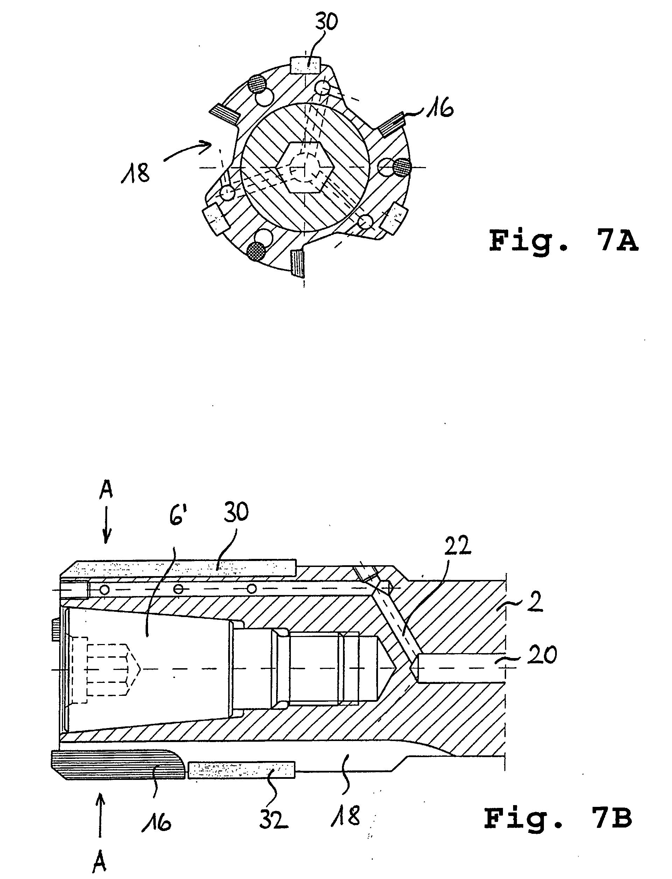

Das in Fig. 7 dargestellte Feinstbearbeitungswerkzeug gemäß einem fünfzehnten Ausführungsbeispiel der Erfindung unterscheidet sich von dem vorhergehend beschriebenen vierzehnten Ausführungsbeispiel in den axial zu jeder Schneide 16 nach hinten versetzten weiteren Führungsleisten 32.

Fig. 8 bis 10 veranschaulichen im Zusammenhang mit Fig. 6 bereits erwähnte Ausführungen eines Feinstbearbeitungswerkzeugs mit Konusschraube, die zeigen sollen, wie die Anlagefläche der Konusschraube für verschiedene Werkzeugausführungen unterschiedlich angeordnet und ausgebildet ist. Die Konusschrauben 6' der hier dargestellten siebzehnten bis neunzehnten Ausführungsbeispiele haben verschiedene Steigungen, die zur Ausbildung benötigter Druckbereiche vorgesehen sind, so daß diese unterschiedliche Durchmesser und axiale Erstreckungen haben. Die Druckbereiche können so an unterschiedliche Durchmesser und axiale Positionen der Konusschraube gelegt werden und bewirken eine definierte Verstellung der Schneiden 16 mit Abstützleisten 30, 32. Die Durchmesser der Konusdruckpunkte werden an den Bearbeitungsfall angepaßt. So wird für kurze Schneiden nur ein vorderer und zweiter Druckpunkt vorgesehen, während für lange Schneiden und Führungsleisten z.B. bis zu vier Druckpunkte vorgesehen werden können. Dies ermöglicht bei langen Schneiden bzw. Führungsleisten, daß diese auch elastisch nach außen gedrückt werden.

Die Druckpunkte ergeben sich auch durch eine entsprechend bereichsweise ballige oder ausgesparte Ausführung der Konusschraube, so daß sich die Druckringe bzw. Druckpunkte, die eine Aufspreizung bewirken, und druckfreie Bereiche 6^{I}, 6^{II}, 6^{III}, 6^{IV} ergeben, die keine Aufspreizung an diesen Stellen bewirken.

Bei dem in Fig. 8 gezeigten Ausführungsbeispiel ist entsprechend der kurzen Schneiden- und Führungsleistenausführung nur ein Druckpunkt 600 praktisch ganz vorne an der Konusschraube 6' vorgesehen.

Das Ausführungsbeispiel von Fig. 9 weist längere Schneiden 16 und Führungsleisten 30 auf, und es sind drei Druckpunkte 602, 604 und 606 über die Länge der Konusschraube verteilt angeordnet.

Noch mehr Druckpunkte, nämlich vier (600, 602, 604, 606), sind bei dem Ausführungsbeispiel von Fig. 10 vorgesehen. Hier ist die Konusschraube 6' entsprechend länger.

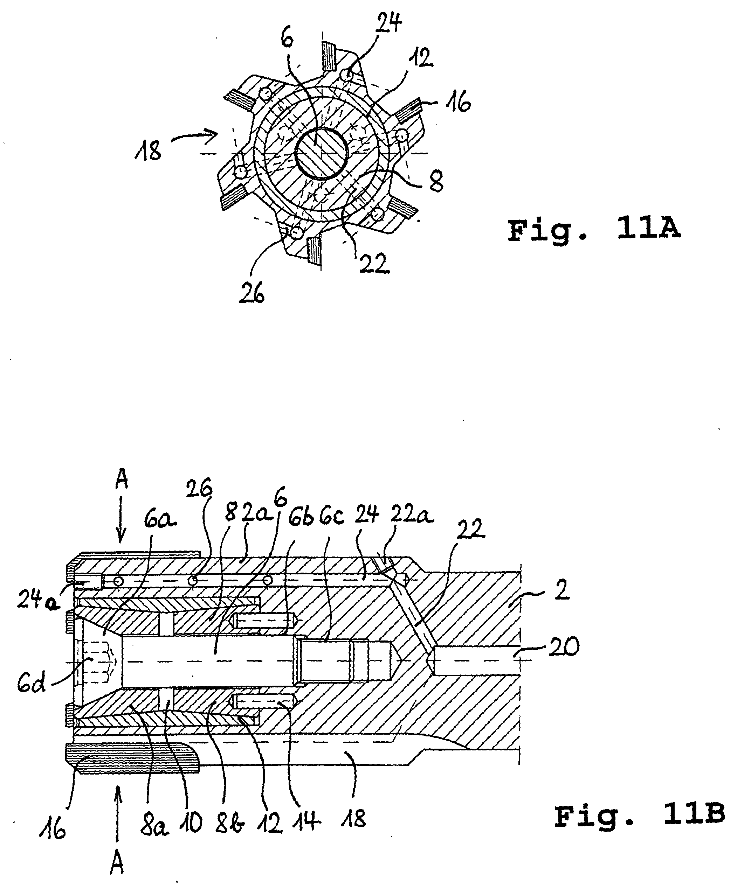

Das in Fig. 11 dargestellte neunzehnte Ausführungsbeispiel unterscheidet sich im wesentlichen von den vorhergehend beschriebenen Ausführungsbeispielen in der Ausführung der Konusschraube und entsprechend in deren Aufnahme im Schaft 2 des Feinstbearbeitungswerkzeugs. Die zentrale Stirnbohrung 4 ist in der Höhe des zylindrischen Teils 6b der Konusschraube 6 zu einer zylindrischen Aufnahmeöffnung erweitert. Die Konusschraube 6 ist mit ihrem konischen Teil 6a und dem vorderen Bereich des zylindrischen Teils 6b von einem zweiteiligen Manteleinsatz 8 mit Innenwandung und konkaver Außenwandung aufgenommen, wobei der vordere Teil 8a des Manteleinsatzes 8 innen konisch entsprechend der Form des konischen Teil 6a der Konusschraube erweitert ist und der vordere Teil 8a und der hintere Teil 8b durch einen Spalt 10 voneinander getrennt sind. Die Breite des Spalts 10 entspricht etwa dem noch freien Bereich der für den Gewindeteil 6c vorgesehenen Stirnbohrung 4, d.h. dem Vorschubbereich der Konusschraube zur achsparallelen Fein-Aufweitung des Schneidbereichs. Der Manteleinsatz 8 ist von einer zylindrischen Hülse 12 mit konvexer Innenwandung aufgenommen, die sich über seine Gesamtlänge erstreckt. Die oben erwähnte Fein-Aufweitung des Schneidbereichs erfolgt über den Eingriff mit der mittleren Wölbung der Hülse 12. Wird die Konusschraube 6 über den Fein-Aufweitbereich weiter einwärts geschraubt, erfolgt eine stärkere Aufweitung des Schneidbereichs über den Eingriff des vorderen Konus. Der hintere Teil 8b des Manteleinsatzes 8 ist mittels Stiften 14 im Schaft 2 ausgerichtet. Im übrigen wird dieses Werkzeug nicht weiter beschrieben und vielmehr auf das Obenstehende Bezug genommen.

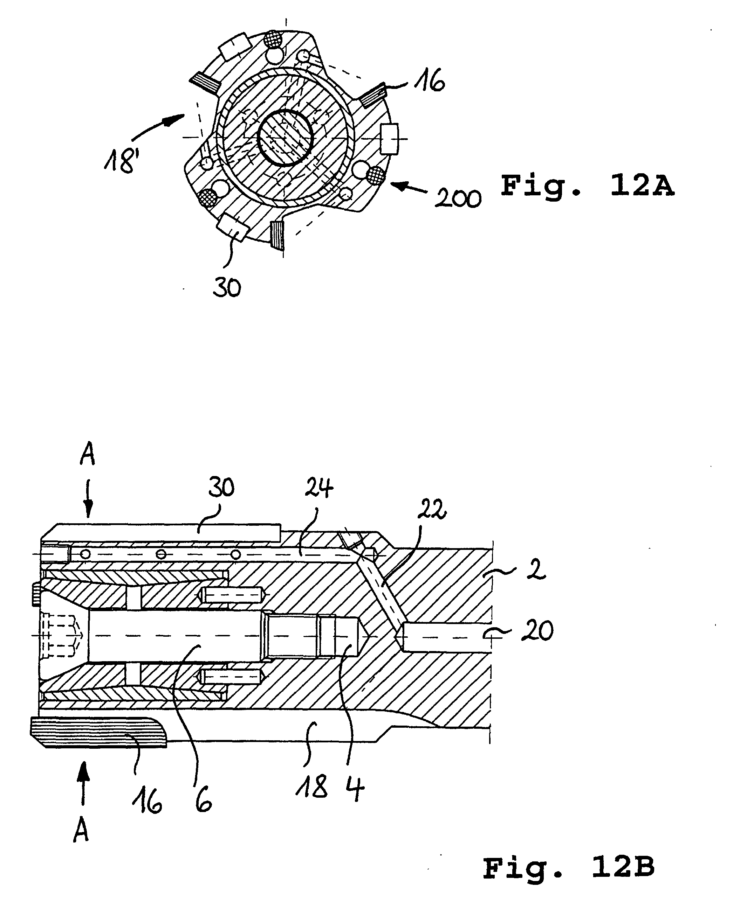

In Fig. 12 ist ein zwanzigstes Ausführungsbeispiel eines Feinstbearbeitungswerkzeugs gezeigt. Dieses weist drei Schneiden 16 und ansonsten im wesentlichen denselben Aufbau wie das zwanzigste Ausführungsbeispiel (gleicher Konusschraubentyp) auf. Zusätzlich sind drei eingesetzte Führungsleisten 30 aus Hartmetall vorgesehen, die sich über einen größere Länge des Schneidbereichs erstrecken.

Des weiteren kann die zentrale Kühlmittelbohrung 20 auch bis in die Bohrung 4 durchgebohrt sein, wo sie durch den Paßbereich 6b' hermetisch abgedichtet wird.

Das mit einer Aufspreizhilfe gemäß der Erfindung ausgeführte Feinstbearbeitungswerkzeug ist mit verschiedenen Aufnahmesystemen adaptierbar, beispielsweise massiven Systemen mit Zylinderschäften, praktisch allen herkömmlichen und Sonderaufnahmesystemen. Im folgenden werden einige Ausführungsbeispiele mit auswechselbarem Schneidkopf veranschaulicht.

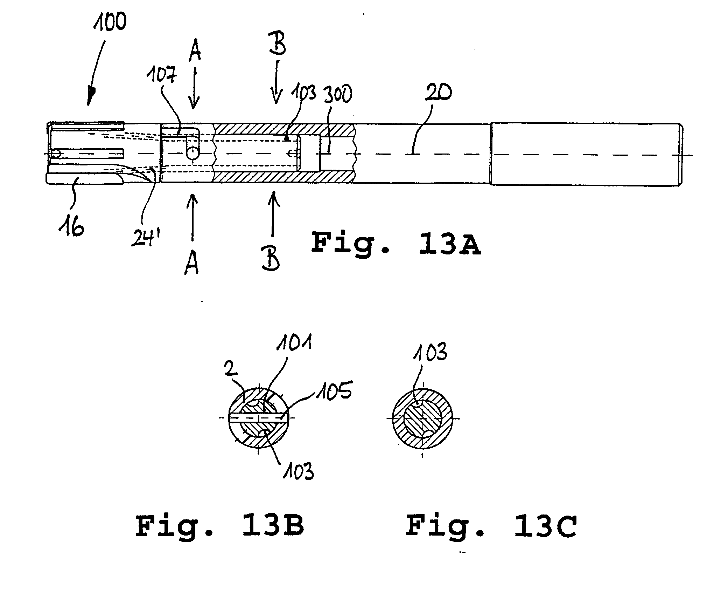

Fig. 13A zeigt einen Teillängsschnitt durch ein einundzwanzigstes Ausführungsbeispiel eines Feinstbearbeitungswerkzeugs mit auswechselbarem Schneidkopf 100. Der Schaft 2 weist eine axiale Kühlmittelbohrung 20 auf. Am vorderen Ende weist er eine Innenbohrung 300 auf, in der das stangenförmige Ende 101 des Schneidkopfes 100 sitzt. In diesem sind zwei Längsnuten 103 als Zuleitbohrungen 24' für Kühl- und Schmiermittel vorgesehen. Die Stange 101 ist mittels eines Sicherungsstiftes 105 für eine Bajonettanordnung 107 im Schaft 2 gehaltert.

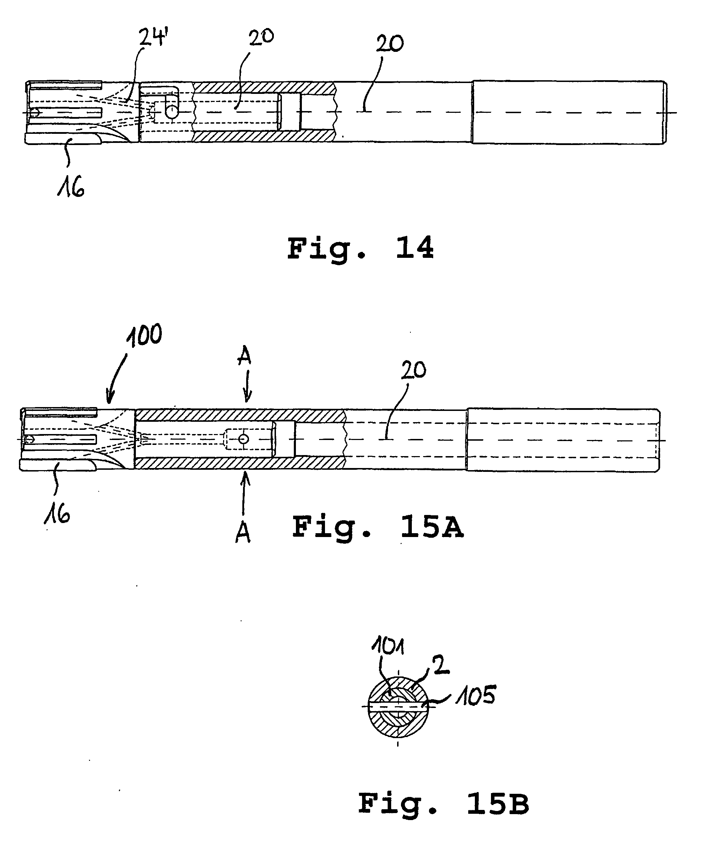

Das in Fig. 14 gezeigte zweiundzwanzigste Ausführungsbeispiel unterscheidet sich von dem vorhergehend beschriebenen Ausführungsbeispiel darin, daß die zentrale Kühlmittelbohrung 20 weiter nach vorne geführt ist und sich erst kurz vor dem Schneidkopf 100 in die Zuleitbohrungen 24' verzweigt.

Ähnlich ist das in Fig. 15 veranschaulichte Ausführungsbeispiel aufgebaut. Statt einer Bajonettsicherung ist der Schneidkopf 100 mittels eines Sicherungsstiftes 105 im Adapterteil gesichert.

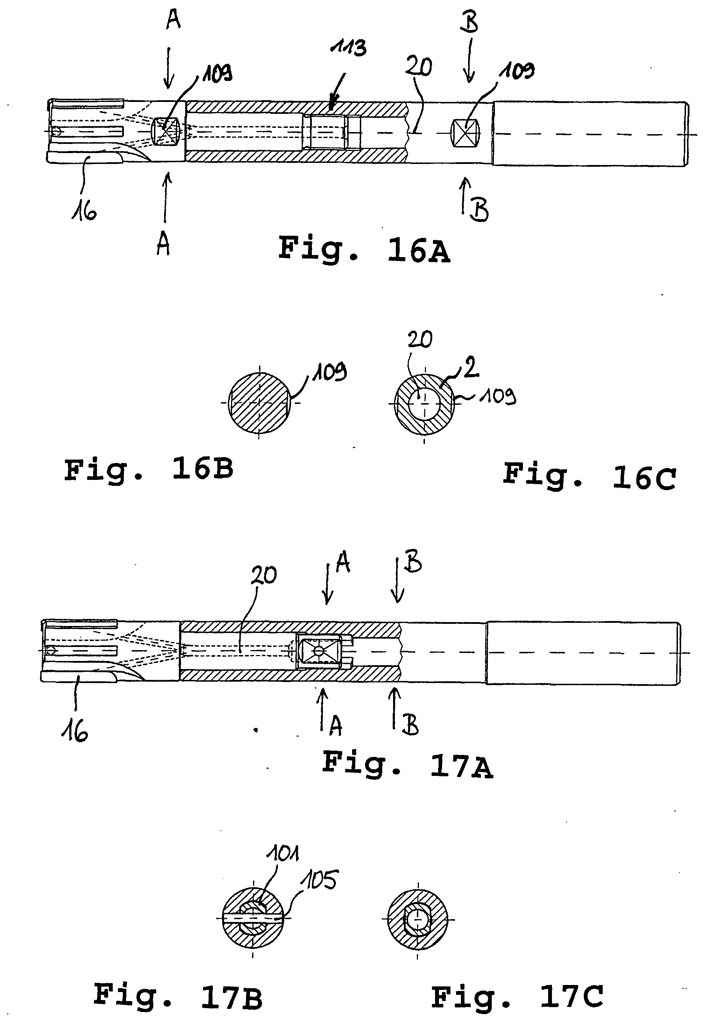

In Fig. 16 ist ein Schneidkopf 100 gezeigt, der mit einer Schlüsselfläche 109 auf zwei gegenüberliegenden Bereichen versehen ist. Der zugehörige Adapterteil bzw. Werkzeugschaft 2 ist ebenfalls mit Schlüsselflächen 109 versehen. Der Schneidkopf 100 ist eingeschraubt (siehe 113). Die Innenkühlung umfaßt einen zentralen Kühlmittelkanal 20 und abgezweigte Zuleitbohrungen 24'.

Bei dem in Fig. 17 veranschaulichten fünfundzwanzigsten Ausführungsbeispiel ist die Schneidkopfstange 101 in ihrem Endbereich abgeflacht. Die Sicherung im Schaft 2 erfolgt wiederum über einen Sicherungsstift 105. Die Innenkühlung ist wie bei dem vorhergehend beschriebenen Ausführungsbeispiel.

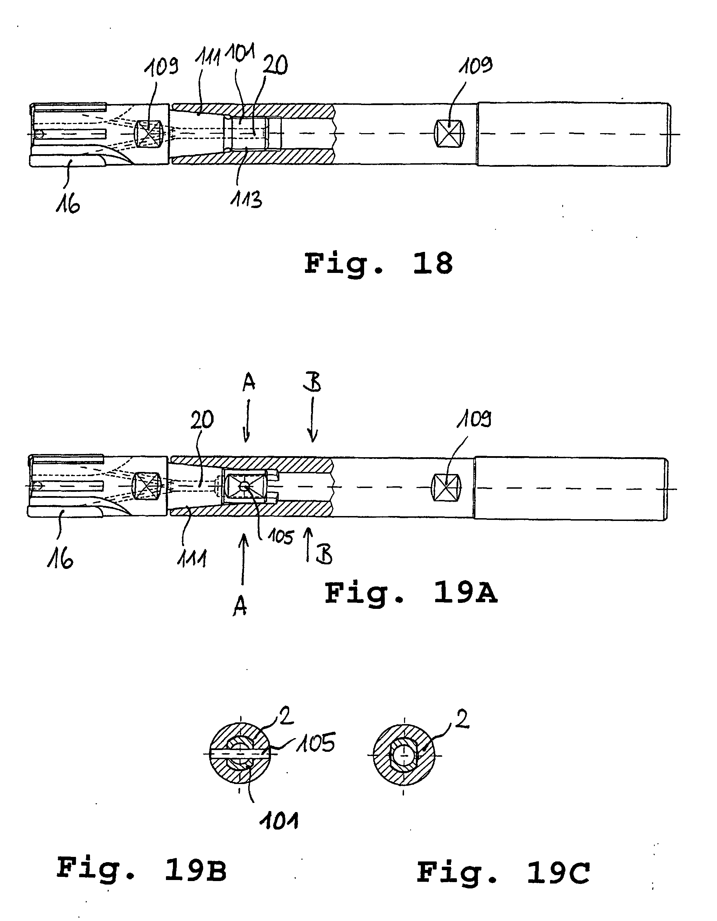

In Fig. 18 ist ein Ausführungsbeispiel mit zwei Schlüsselflächen 109 veranschaulicht, bei der der Schneidkopf 100 einen konischen Endabschnitt 111 aufweist, durch den sich noch die zentrale Kühlmittelbohrung 20 erstreckt, bevor sie sich in die Zuleitbohrungen 24' verzweigt. Der konische Abschnitt 111 bewirkt eine gute Zentrierung des Schneidkopfes im Schaft 2.

Das Ausführungsbeispiel von Fig. 19 weist eine konische Zentrierung und eine Stiftbefestigung auf. Die Innenkühlung ist axial ausgelegt. Erst im Schneidkopf 100 sind Zuleitbohrungen 24' vorgesehen. Dies ist von der Fertigungsseite her kostengünstig.

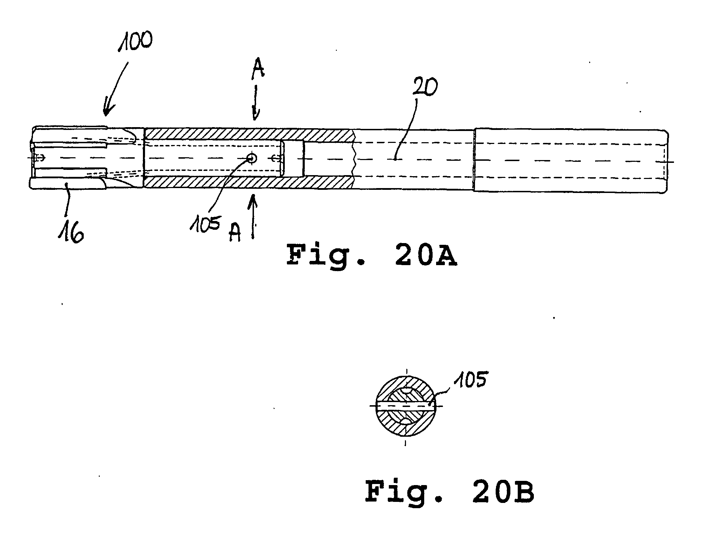

Bei dem Ausführungsbeispiel von Fig. 20 sind wieder die Zuleitungen als Nuten 103 im Stangenabschnitt 101 ausgespart. Für die Befestigung und Sicherung des Schneidkopfes 100 im Schaft ist ein Sicherungsstift 105 vorgesehen.

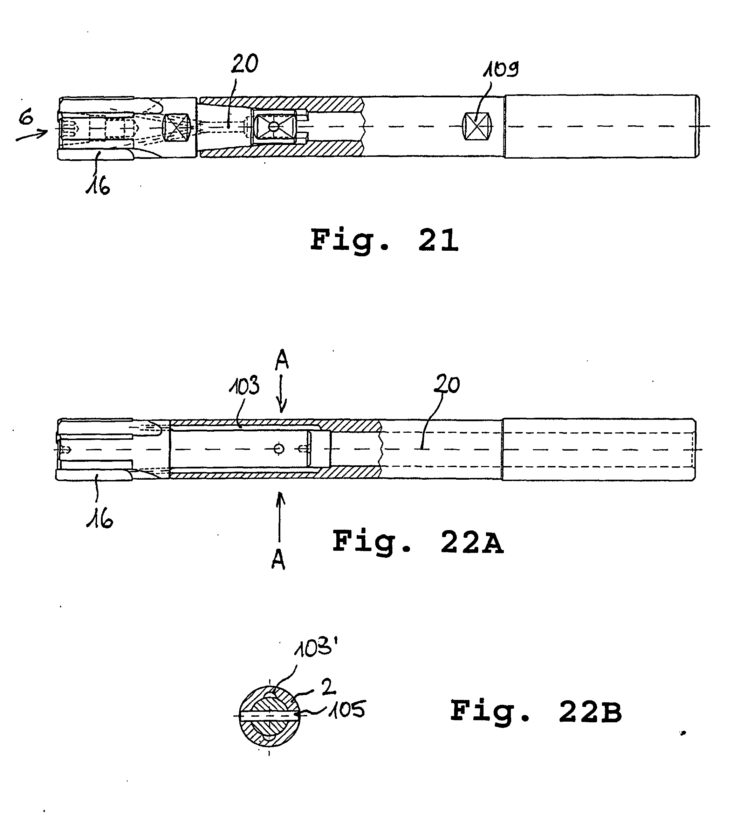

Der in Fig. 21 veranschaulichte Schneidkopf umfaßt eine Konusschraube 6. Im übrigen gleicht das Werkzeug dem von Fig. 20.

Bei dem in Fig. 22 gezeigten Ausführungsbeispiel sind die Nuten 103 nicht im Stangenabschnitt 101, sondern in der Wandung des Schafts 2 ausgespart. Für die Sicherung ist wieder ein Sicherungsstift vorgesehen.

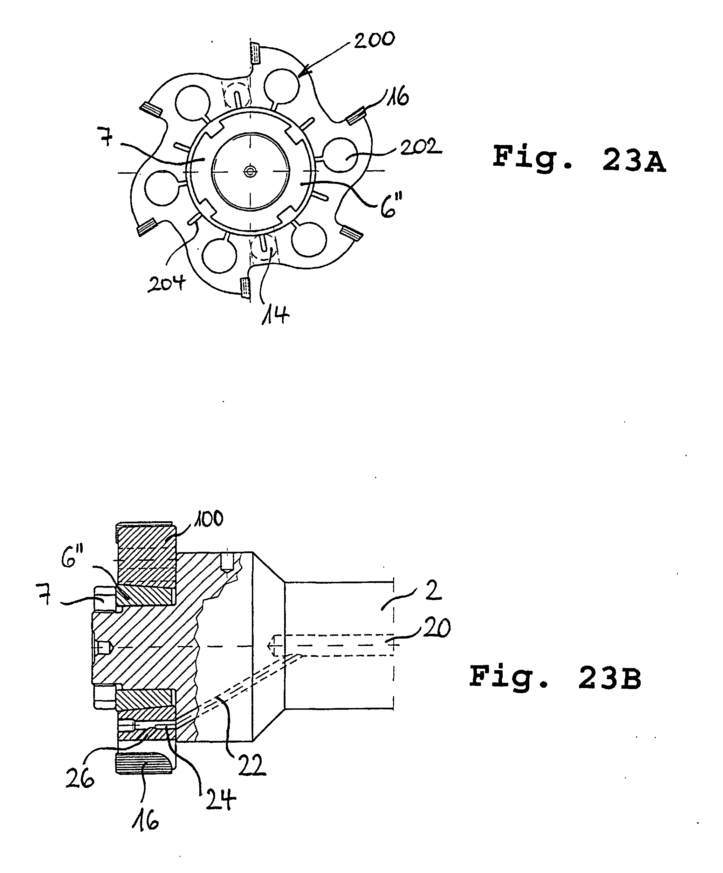

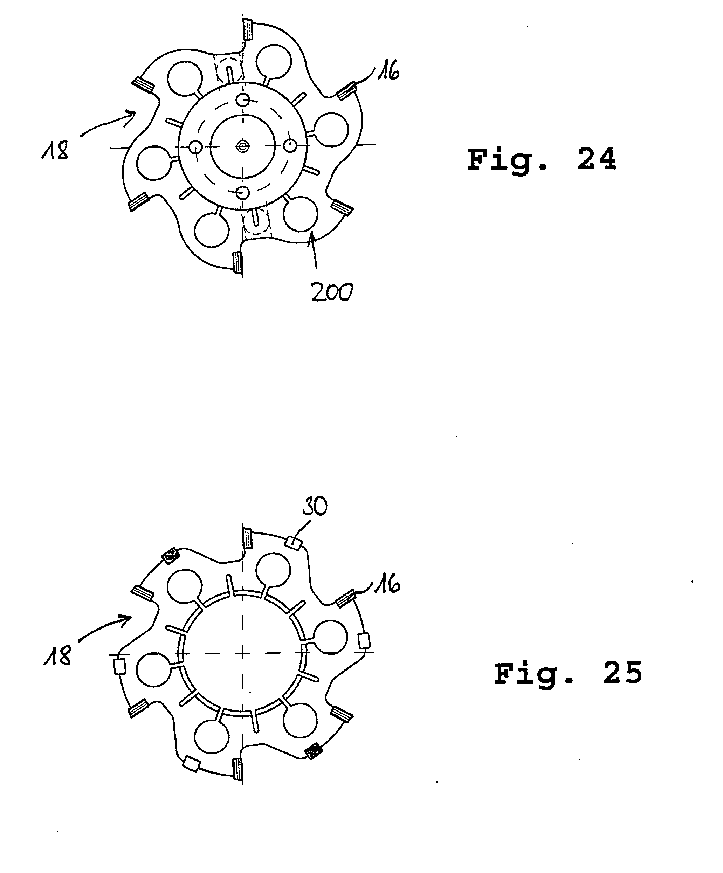

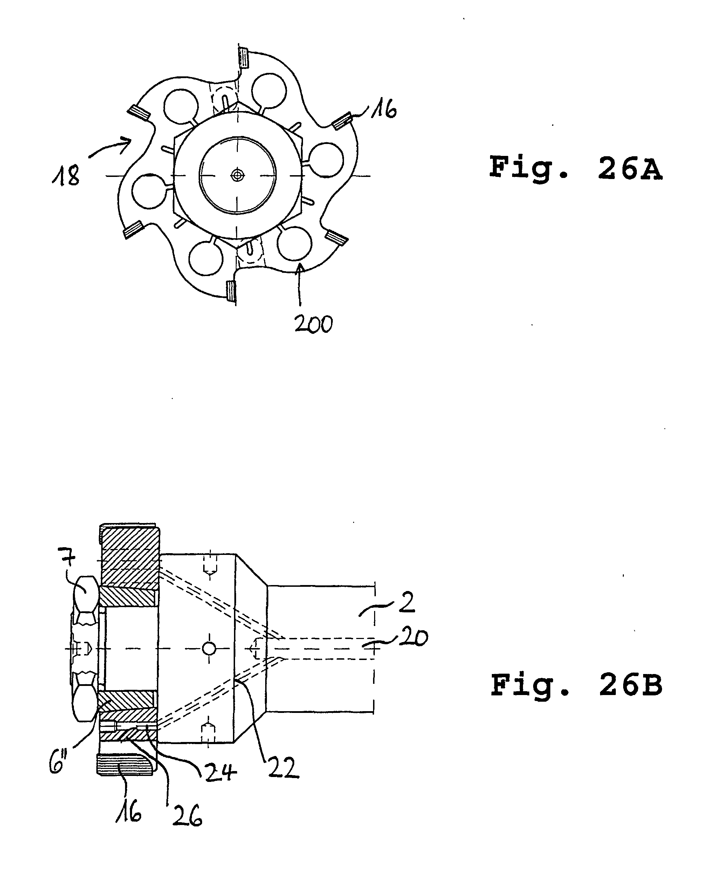

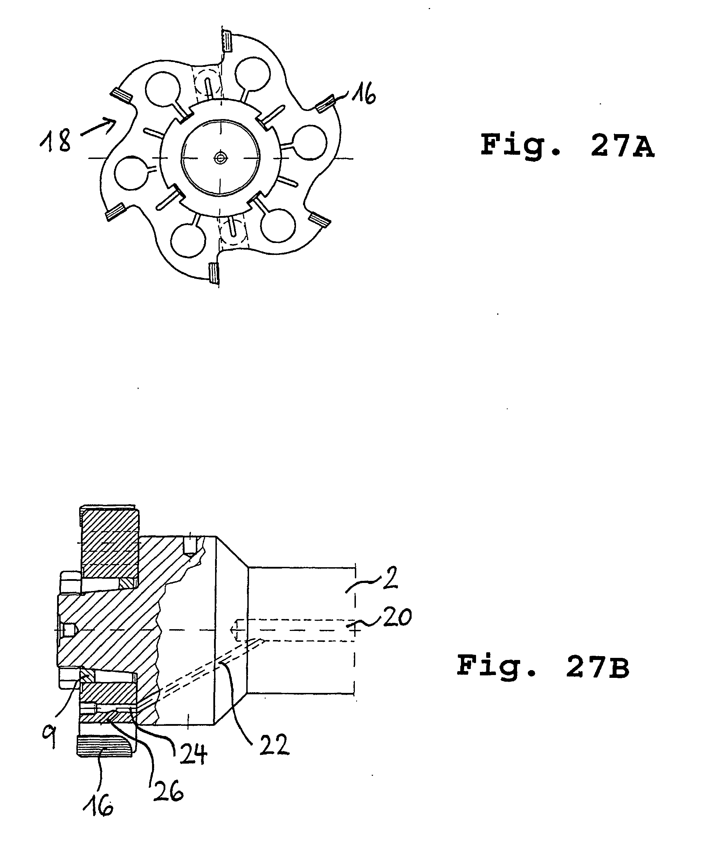

In Fig. 23 bis 31 sind Beispiele für auswechselbare Schneidköpfe gezeigt. Diese sind sämtlich mit einer Konusschraube 6 oder einem Konusring 6" versehen. Als Sicherung sind in Fig. 23 bis 25 Muttern 7 aufgeschraubt, die zugleich beim Schraubvorgang über den Konus die Aufweitung des Schneidkopfes bzw. dessen Fixierung herbeiführen. Zentrierstifte 14 sorgen für die exakte Aufnahme des Schneidkopfes. Die Innenkühlung hat eine zentrale Zuführung 20 über den Schaft 2. In Fig. 24 ist das Druckstück und ebenfalls das Schaftende konisch, was die Wirkung einer Spannzange ergibt.

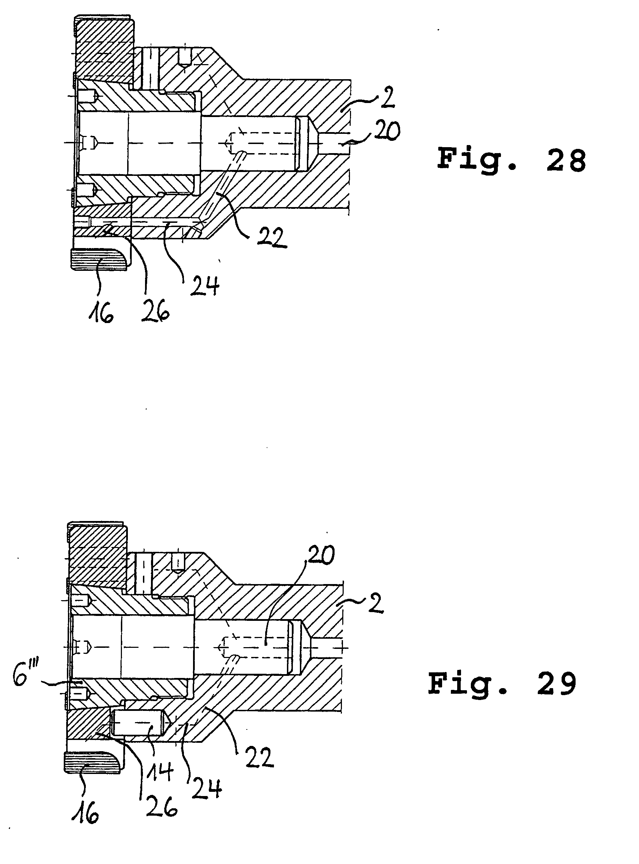

In Fig. 28 und 29 ist ein abgestufter, teilweise konischer zentraler Zapfen 6'" gezeigt, über den die Zentrierung erfolgt. Sein mittlerer zylindrischer Abschnitt befindet sich wie der oben erwähnte zylindrische Abschnitt 6b der Konusschraube im Paßsitz. Ebenfalls ist ein Gewindeabschnitt vorgesehen.

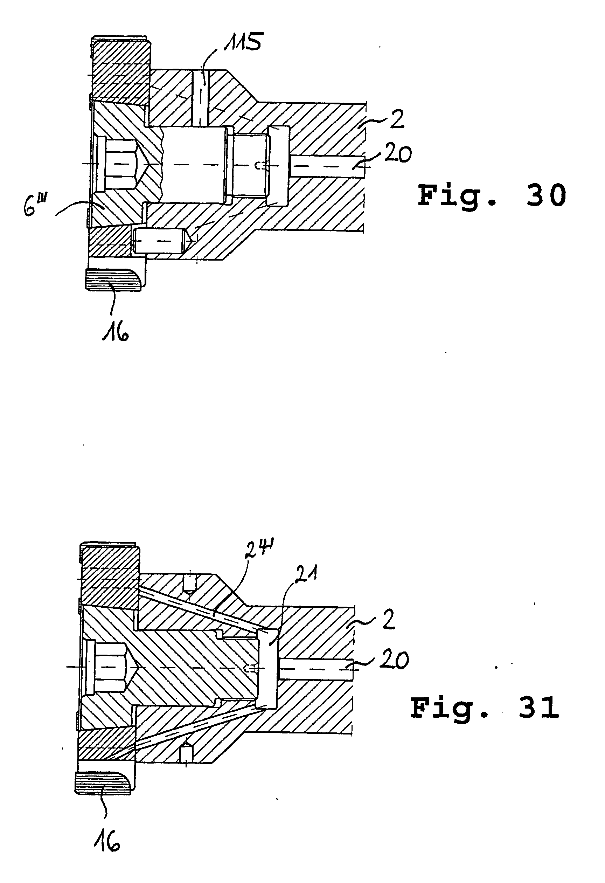

Bei den in Fig. 30 und 31 veranschaulichten Ausführungsbeispielen endet die zentrale Kühlmittelbohrung 20 in einem Verteilerring 21, von dem Zuleitbohrungen 24' ausgehen. Es kann wie gezeigt eine radiale Bohrung 115 zur Sicherung des zentralen Zapfens 6'" vorgesehen sein.

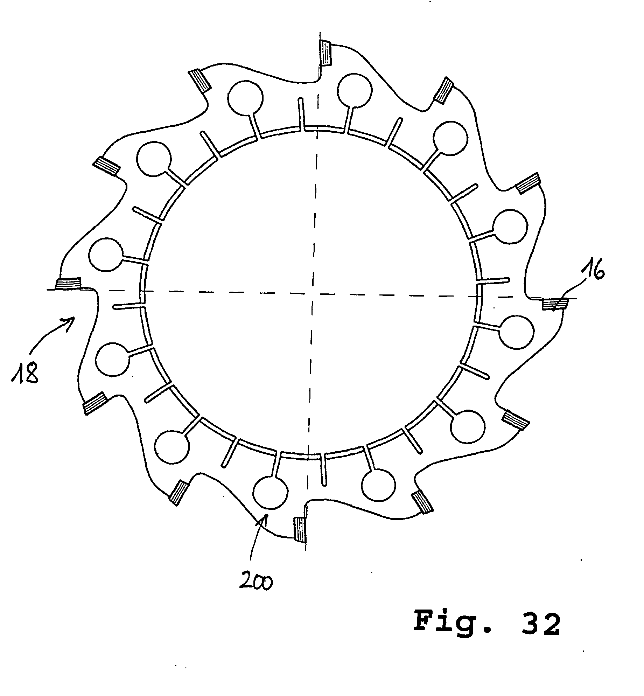

Fig. 32 zeigt eine Stirnansicht eines Schneidkopfs eines einundvierzigsten Ausführungsbeispiels eines Feinstbearbeitungswerkzeugs mit zwölf Schneiden.

## Patentansprüche

1. Feinstbearbeitungswerkzeug, insbesondere Reibahle, mit einem Schaft (2) und mindestens einer starren Schneide (16) sowie mindestens einer Führungsleiste (30) am Umfang und einem Mittel (6), mittels dessen der Schneiddurchmesser einstellbar ist, wobei das Mittel (6) zur Einstellung des Schneiddurchmessers ein Aufspreizteil mit sich änderndem Durchmesser ist, **dadurch gekennzeichnet, daß** die Länge des Bereichs des Aufspreizteils mit sich änderndem Durchmesser mindestens gleich lang wie die Schneide (16) ist und das Aufspreizteil (6) entsprechend den Bereichen mit unterschiedlichen Durchmessern Druckbereiche an unterschiedlichen axialen Positionen (600, 602, 604, 606) aufweist derart, daß die Schneide (16) an gezielten axialen Bereichen druckbeaufschlagt und im Durchmesser verstellt wird.

2. Feinstbearbeitungswerkzeug nach Anspruch 1, **dadurch gekennzeichnet, daß** das Aufspreizteil (6) eine Konusschraube ist.

3. Feinstbearbeitungswerkzeug nach Anspruch 1, **dadurch gekennzeichnet, daß** das Aufspreizteil (6) ein Konusring ist.

4. Feinstbearbeitungswerkzeug nach einem der Ansprüche 1 bis 3, **dadurch gekennzeichnet, daß** im Schaft (2) Aussparungen (202, 204) als Spreizhilfe vorgesehen sind.

5. Feinstbearbeitungswerkzeug nach einem der Ansprüche 1 bis 4, **dadurch gekennzeichnet, daß** das Aufspreizteil (6) Konusabschnitte mit unterschiedlichem Konuswinkel aufweist.

6. Feinstbearbeitungswerkzeug nach einem der Ansprüche 1 bis 5, **dadurch gekennzeichnet, daß** das Aufspreizteil (8) mehrteilig aufgebaut ist.

7. Feinstbearbeitungswerkzeug nach einem der Ansprüche 2, 4 bis 6, **dadurch gekennzeichnet, daß** die Konusschraube (6) anschließend an den Gewindebereich (6a) einen zylindrischen Abschnitt (6b) aufweist, der im Paßsitz im Werkzeugschaft (2) sitzt.

8. Feinstbearbeitungswerkzeug nach einem der Ansprüche 1 bis 7, **dadurch gekennzeichnet, daß** eine zentrale axiale Kühlmittelbohrung (20) für Kühl- und/oder Schmiermittel im Werkzeugschaft (2) vorgesehen ist.

9. Feinstbearbeitungswerkzeug nach Anspruch 8, **dadurch gekennzeichnet, daß**
von der axialen Kühlmittelbohrung (20) in deren vorderem Bereich mindestens eine Abzweigbohrung (22) nach außen führt,
die Abzweigbohrung (22) in eine koaxiale Zuleitbohrung (24) mündet, die sich axial mindestens teilweise über den Schneidbereich erstreckt, und
von der koaxialen Zuleitbohrung (24) mindestens eine Austrittsbohrung (26) zum Schneidbereich führt.

10. Feinstbearbeitungswerkzeug nach Anspruch 8 oder 9, **dadurch gekennzeichnet, daß** der Führungsleiste (30) mindestens eine Austrittsbohrung (26) zugeordnet ist.

11. Feinstbearbeitungswerkzeug nach einem der Ansprüche 8 bis 10, **dadurch gekennzeichnet, daß** sich die koaxiale Zuleitbohrung (24) über die gesamte Länge des Schneidbereichs erstreckt.

12. Feinstbearbeitungswerkzeug nach einem der Ansprüche 8 bis 11, **dadurch gekennzeichnet, daß** axial versetzt mehrere Austrittsbohrungen (26) vorgesehen sind.

13. Feinstbearbeitungswerkzeug nach einem der Ansprüche 8 bis 12, **dadurch gekennzeichnet, daß** die Austrittsbohrung (26) in den Spanraum einer zugeordneten Schneide (16, 160) mündet.

14. Feinstbearbeitungswerkzeug nach einem der Ansprüche 8 bis 13, **dadurch gekennzeichnet, daß** die der Führungsleiste (30) zugeordnete Austrittsbohrung (26) in Drehrichtung vor der Führungsleiste nach außen führt.

15. Feinstbearbeitungswerkzeug nach einem der Ansprüche 8 bis 14, **dadurch gekennzeichnet, daß** die Abzweigbohrung (24) schräg nach vorne gerichtet ist.

16. Feinstbearbeitungswerkzeug nach einem der Ansprüche 8 bis 15, **dadurch gekennzeichnet, daß** die der Führungsleiste (30) zugeordnete Abzweig- und/oder Austrittsbohrung (24, 26) einen kleineren Durchmesser als die der Schneide (16, 160) zugeordnete Bohrung aufweist.

17. Feinstbearbeitungswerkzeug nach einem der Ansprüche 2 und 8 bis 16, **dadurch gekennzeichnet, daß** die Konusschraube (6) mit ihrem Gewindeende den axialen Kanal (20) verschließt.

18. Feinstbearbeitungswerkzeug mit Innenkühlung nach einem der Ansprüche 8 bis 17, **dadurch gekennzeichnet, daß** die axiale Kühlmittelbohrung (20) vor dem der Werkzeugspitze entgegengesetzten Ende des Aufspreizteils (6) in einen Verteilerring (21) mündet, von dem Abzweigbohrungen (24') ausgehen.

19. Feinstbearbeitungswerkzeug nach einem der Ansprüche 1 bis 18, **dadurch gekennzeichnet, daß** eine Stirnschneide oder ein Stirnschneidenbereich vorgesehen ist.

20. Feinstbearbeitungswerkzeug nach einem der Ansprüche 1 bis 19, **dadurch gekennzeichnet, daß** die Schneide (16) und/oder Führungsleiste aus Hartmetall, Cermet, Keramik, polykristallinem, Natur- oder synthetischem Diamant als Dünn- und Dickfilm oder kubisches Bor-Nitrid (synthetischem Diamant, mit und ohne Beschichtung) besteht.

21. Feinstbearbeitungswerkzeug nach einem der Ansprüche 1 bis 20, **dadurch gekennzeichnet, daß** der Schneidkopf (100) auswechselbar ist.

22. Feinstbearbeitungswerkzeug nach Anspruch 21, **dadurch gekennzeichnet, daß** der Schneidkopf mittels einer Bajonettverbindung (103, 105) am Werkzeugschaft (2) befestigt ist.

23. Feinstbearbeitungswerkzeug nach Anspruch 21, **dadurch gekennzeichnet, daß** der Schneidkopf mittels einer Konusschraube (6'") am Werkzeugschaft (2) befestigt ist.

24. Feinstbearbeitungswerkzeug nach einem der Ansprüche 1 bis 23, **dadurch gekennzeichnet, daß** es zwei, drei oder mehr Schneiden (16) aufweist.

## Claims

1. Superfinishing tool, in particular a reamer, having a shaft (2) and at least one rigid cutting edge (16) and at least one guide strip (30) on the periphery and a means (6) which serves to adjust the cutting diameter, wherein the means (6) for adjusting the cutting diameter is an expansion part having a varying diameter, **characterised in that** the length of the region of the expansion part having the varying diameter is at least as long as the cutting edge (16) and the expansion part (6) corresponding to the regions having different diameters comprises pressure regions at different axial positions (600, 602, 604, 606) such that the cutting edge (16) is pressurised at specific axial regions and is adjusted in diameter.

2. Superfinishing tool as claimed in claim 1, **characterised in that** the expansion part (6) is a cone screw.

3. Superfinishing tool as claimed in claim 1, **characterised in that** the expansion part (6) is a cone ring.

4. Superfinishing tool as claimed in any of claims 1 to 3, **characterised in that** the shaft (2) is provided with recesses (202, 204) as an expansion aid.

5. Superfinishing tool as claimed in any of claims 1 to 4, **characterised in that** the expansion part (6) comprises cone portions having a different cone angle.

6. Superfinishing tool as claimed in any of claims 1 to 5, **characterised in that** the expansion part (8) is constructed of multiple parts.

7. Superfinishing tool as claimed in any of claims 2, 4 to 6, **characterised in that** adjoining the threaded region (6a) the cone screw (6) comprises a cylindrical portion (6b) which sits in the tool shaft (2) in a snug fit.

8. Superfinishing tool as claimed in any of claims 1 to 7, **characterised in that** a central axial coolant bore (20) for coolant and/or lubricant is provided in the tool shaft (2).

9. Superfinishing tool as claimed in claim 8, **characterised in that** at least one branch bore (22) leads outwards from the axial coolant bore (20) in its front region,
the branch bore (22) issues into a coaxial inlet bore (24) which extends axially at least partially over the cutting region, and
at least one outlet bore (26) leads from the coaxial inlet bore (24) to the cutting region.

10. Superfinishing tool as claimed in claim 8 or 9, **characterised in that** the guide strip (30) is allocated at least one outlet bore (26).

11. Superfinishing tool as claimed in any of claims 8 to 10, **characterised in that** the coaxial inlet bore (24) extends over the entire length of the cutting region.

12. Superfinishing tool as claimed in any of claims 8 to 11, **characterised in that** several outlet bores (26) are provided axially offset.

13. Superfinishing tool as claimed in any of claims 8 to 12, **characterised in that** the outlet bore (26) issues into the chip space of an associated cutting edge (16, 160).

14. Superfinishing tool as claimed in any of claims 8 to 13, **characterised in that** the outlet bore (26) which is allocated to the guide strip (30) leads outwards in the direction of rotation in advance of the guide strip.

15. Superfinishing tool as claimed in any of claims 8 to 14, **characterised in that** the branch bore (24) is directed in an inclined manner towards the front.

16. Superfinishing tool as claimed in any of claims 8 to 15, **characterised in that** the branch bore and/or outlet bore (24, 26) allocated to the guide strip (30) comprise(s) a smaller diameter than the bore allocated to the cutting edge (16, 160).

17. Superfinishing tool as claimed in any of claims 2 and 8 to 16, **characterised in that** the cone screw (6) uses its threaded end to close the axial duct (20).

18. Superfinishing tool comprising internal cooling as claimed in any of claims 8 to 17, **characterised in that** the axial coolant bore (20) in advance of the end of the expansion part (6) opposite the tool tip issues into a distributor ring (21), from which branch bores (24') issue.

19. Superfinishing tool as claimed in any of claims 1 to 18, **characterised in that** an end cutting edge or an end cutting region is provided.

20. Superfinishing tool as claimed in any of claims 1 to 19, **characterised in that** the cutting edge (16) and/or guide strip consist(s) of hard metal, cermet, ceramic, polycrystalline, natural or synthetic diamond as a thin and thick film or cubic boron-nitride (synthetic diamond, with and without a coating).

21. Superfinishing tool as claimed in any of claims 1 to 20, **characterised in that** the cutting head (100) is interchangeable.

22. Superfinishing tool as claimed in claim 21, **characterised in that** the cutting head is attached to the tool shaft (2) by means of a bayonet connection (103, 105).

23. Superfinishing tool as claimed in claim 21, **characterised in that** the cutting head is attached to the tool shaft (2) by means of a cone screw (6"').

24. Superfinishing tool as claimed in any of claims 1 to 23, **characterised in that** it comprises two, three or more cutting edges (16).

## Revendications

1. Outil pour usinage de haute précision, en particulier alésoir, comportant une queue d'outil (2) et au moins une lame (16) rigide, ainsi qu'au moins une nervure de guidage (30) disposée sur la périphérie et un moyen (6) par lequel le diamètre de coupe de l'outil peut être réglé, le moyen (6) de réglage du diamètre de coupe étant un élément expanseur à diamètre variable, **caractérisé en ce que** la longueur de la zone de l'élément expanseur (6) à diamètre variable est au moins égale à la longueur de la lame (16) et **en ce que** l'élément expanseur comporte des zones de pression en différents points axiaux (600, 602, 604, 606), en accord avec les zones de différents diamètres, de telle sorte que la lame (16), dans des zones axiales ciblées, peut être sollicitée par une pression et déplacée sur le diamètre.

2. Outil pour usinage de haute précision selon la revendication 1, **caractérisé en ce que** l'élément expanseur (6) est une vis conique.

3. Outil pour usinage de haute précision selon la revendication 1, **caractérisé en ce que** l'élément expanseur (6) est une bague conique.

4. Outil pour usinage de haute précision selon une des revendications 1 à 3, **caractérisé en ce qu'**il est prévu dans la queue d'outil (2) des évidements (202, 204) en tant que moyens favorisant l'expansion.

5. Outil pour usinage de haute précision selon une des revendications 1 à 4, **caractérisé en ce que** l'élément expanseur (6) présente des portions de cône avec des angles de cône différents.

6. Outil pour usinage de haute précision selon une des revendications 1 à 5, **caractérisé en ce que** l'élément expanseur (6) est en plusieurs parties.

7. Outil pour usinage de haute précision selon une des revendications 1 à 4, **caractérisé en ce que** la vis conique (6) présente, à la suite de la portion filetée (6a), une portion (6b) cylindrique qui est montée avec ajustement fin dans la queue d'outil (2).

8. Outil pour usinage de haute précision selon une des revendications 1 à 7, **caractérisé en ce qu'**il est prévu dans la queue d'outil (2), un conduit axial (20) pour le fluide de refroidissement et/ou le lubrifiant.

9. Outil pour usinage de haute précision selon la revendication 8, **caractérisé en ce que**
- à partir du conduit à fluide de refroidissement (20) axial, dans la partie antérieure de celui-ci; au moins un conduit de dérivation (22) mène vers l'extérieur,
- le conduit de dérivation (22) débouche dans un conduit d'alimentation (24) coaxial qui s'étend dans la direction axiale au moins partiellement sur la zone de coupe et
- à partir du conduit d'alimentation (24) coaxial, au moins un conduit de sortie (26) mène à la zone de coupe.

10. Outil pour usinage de haute précision selon la revendication 8 ou 9, **caractérisé en ce qu'**au moins un conduit de sortie (26) est associé à la nervure de guidage (30).

11. Outil pour usinage de haute précision selon une des revendications 8 à 10, **caractérisé en ce que** le conduit d'alimentation (24) coaxial s'étend sur toute la longueur de la zone de coupe.

12. Outil pour usinage de haute précision selon une des revendications 8 à 11, **caractérisé en ce qu'**il est prévu plusieurs conduits de sortie (26) décalés dans la direction axiale.

13. Outil pour usinage de haute précision selon une des revendications 8 à 12, **caractérisé en ce que** le conduit de sortie (26) débouche dans le logement à copeau d'une lame (16, 160) associée.

14. Outil pour usinage de haute précision selon une des revendications 8 à 13, **caractérisé en ce que** le conduit de sortie (26) associé à la nervure de guidage (30) débouche devant la nervure de guidage, vu dans la direction de rotation.

15. Outil pour usinage de haute précision selon une des revendications 8 à 14, **caractérisé en ce que** le conduit de dérivation (24) est incliné vers l'avant.

16. Outil pour usinage de haute précision selon une des revendications 8 à 15, **caractérisé en ce que** le conduit d'alimentation et/ou le conduit de sortie (24, 26) associé à la nervure de guidage (30) a un diamètre plus petit que le conduit associé à la lame (16, 160).

17. Outil pour usinage de haute précision selon une des revendications 2 et 8 à 16, **caractérisé en ce que** la vis conique (6) ferme le conduit axial (20) avec son extrémité filetée.

18. Outil pour usinage de haute précision à refroidissement interne selon une des revendications 8 à 17, **caractérisé en ce que** le conduit à fluide de refroidissement (20) axial, avant l'extrémité de l'élément expanseur (6) opposée à la pointe de l'outil, débouche dans une bague de répartition (21), de laquelle partent deux conduits de dérivation (24').

19. Outil pour usinage de haute précision selon une des revendications 1 à 18, **caractérisé en ce qu'**il est prévu une lame frontale ou zone de coupe frontale.

20. Outil pour usinage de haute précision selon une des revendications 1 à 19, **caractérisé en ce que** la lame (16) et/ou la nervure de guidage est en métal dur, en cermet, en céramique, en diamant naturel ou synthétique poly cristallin sous forme de couche mince ou de film épais, ou en nitrure de bore cubique (diamant synthétique, avec et sans revêtement).

21. Outil pour usinage de haute précision selon une des revendications 1 à 20, **caractérisé en ce que** la tête de coupe (100) est interchangeable.

22. Outil pour usinage de haute précision selon la revendication 21, **caractérisé en ce que** la tête de coupe est fixée à la queue d'outil (2) par une liaison à baïonnette (103, 105).

23. Outil pour usinage de haute précision selon la revendication 21, **caractérisé en ce que** la tête de coupe est fixée à la queue d'outil (2) par une vis conique (6"').

24. Outil pour usinage de haute précision selon une des revendications 1 à 23, **caractérisé en ce qu'**il comporte deux, trois lames ou plus.
